# EUROPEAN PATENT SPECIFICATION

(11) **EP 2 639 726 B1**
(45) Date of publication and mention of the grant of the patent: **20.02.2019**
(21) Application number: 11839566.4
(22) Date of filing: 10.11.2011
(51) Int. Cl.: G06F 21/31, H04L 9/32, G06F 21/32, G06F 21/34, G06Q 20/40

(54) **SERVICE PROVISION SYSTEM AND UNIT DEVICE**
DIENSTBEREITSTELLUNGSSYSTEM UND -VORRICHTUNG
SYSTÈME FOURNISSEUR DE SERVICES ET DISPOSITIF D'UNITÉ

(30) Priority: 10.11.2010 JP 2010252331
(43) Date of publication of application: 18.09.2013
(73) Proprietor: Kabushiki Kaisha Toshiba, Minato-ku Tokyo 105-8001 (JP); Toshiba Solutions Corporation, Tokyo 105-6691 (JP)
(72) Inventor: YAMADA, Asahiko, Tokyo 105-6691 (JP); OKADA, Koji, Tokyo 105-6691 (JP); IKEDA, Tatsuro, Tokyo 105-6691 (JP)
(74) Representative: Hoffmann Eitle
(86) International application number: PCT/JP2011/075911
(87) International publication number: WO 2012/063892

(56) References cited:
- EP-A1- 1 944 714
- WO-A1-00/18162
- JP-A- 2002 368 737
- JP-A- 2006 011 768
- JP-A- 2007 149 066
- JP-A- 2007 257 428
- JP-A- 2007 304 742
- JP-A- 2010 238 102
- SCHNEIER B ED - SCHNEIER B: "COMMUNICATIONS USING PUBLIC-KEY CRYPTOGRAPHY", 1 January 1996 (1996-01-01), APPLIED CRYPTOGRAPHY, PROTOCOLS, ALGORITHMS, AND SOURCE CODE IN C, JOHN WILEY & SONS, INC, NEW YORK, PAGE(S) 31 - 35,52, XP002250458, ISBN: 978-0-471-11709-4 * the whole document *

## Description

### Technical Field

Embodiments described herein relate generally to a service providing system and a unit device.

### Background Art

In general, when a user receives a service from a service provider, a credit-card settlement based on a credit card of the user may be used. In the credit-card settlement of this kind, it is considered that a person having a credit card is identified by his/her signature. In deposit withdrawals or transfers in a bank, it is considered that a person having a bank card is identified by matching his/her personal identification number on the basis of the bank card number.

In this way, in the credit-card settlement and the deposit withdrawals or transfers, authentication by the signature or personal identification number is used in either real transactions in stores or in on-line virtual transactions.

### Citation List

### Patent Literature

Patent Literature 1: Jpn. Pat. Appln. KOKAI Publication No. 2007-34735
Patent Literature 2: Jpn. Pat. Appln. KOKAI Publication No. 2007-304742
Patent Literature 3: Jpn. Pat. Appln. KOKAI Publication No. 2006-11768

However, in the credit-card settlement and the deposit withdrawals or transfers described above, it is impossible to identify the user of the credit card number or the bank card number and the personal identification number as the owner of the card. Therefore, the problem caused in the event of the leakage of service user identification information such as the credit card number or the bank card number and the personal identification number is that it is impossible to prevent the other person from pretending to be the owner of the card.

In real transactions in stores, it is necessary to carry and present a card such as the credit card or the bank card having service user identification information therein.

Furthermore, WO 00/18162 A1 describes a method for authenticating embedded software in the memory of a responder over an unprotected channel. The method includes the step of transmitting a verify request and a unique nonce from a challenger to the responder over the unprotected channel. The method further includes the step of processing the embedded software and the nonce using a cryptographic hash function to produce a hash digest, wherein the embedded software includes a unique identifier. The method further includes the steps of transmitting the hash digest to the challenger and processing a copy of the embedded software and the nonce using the cryptographic hash function to produce a verification hash digest. The method further includes the step of authenticating the embedded software when the received hash digest and the verification hash digest match.

SCHNEIER B, COMMUNICATIONS USING PUBLIC-KEY CRYPTOGRAPHY, APPLIED CRYPTOGRAPHY, PROTOCOLS, ALGORITHMS, AND SOURCE CODE IN C, JOHN WILEY & SONS, INC, NEW YORK, describes public-key encryption.

EP 1 944 714 A1 describes methods for ensuring secure authentication of identities of multiple electronic devices using certificates.

It is an object of the present invention to provide a service providing system and a unit device which eliminate the necessity of carrying and presenting a card having service user identification information therein and which can reduce the possibility of the leakage of the service user identification information and which enables the identification of a user.

### Summary of Invention

A service providing system of an embodiment comprises a plurality of unit devices, a unit integrating device, a user terminal, a verifying device, and a service providing device.

The unit devices independently execute authentication constituting processes constituting authentication processing that uses biometric authentication. The unit integrating device has each of the unit devices provided therein or externally connected thereto to communicate with each of the unit devices. The user terminal has the unit integrating device provided therein or externally connected thereto to communicate with the unit integrating device. The verifying device verifies the execution contents of each of the authentication constituting processes in accordance with an authenticator. The service providing device communicates with the user terminal and the verifying device.

Each of the unit devices comprises an equipment certificate storage means, an evaluation report storage means, a secret information storage means, an authentication constituting process executing means, an authenticator generating means, an authentication context generating means, an authentication constituting process result information generating means, and a result information sending means.

The equipment certificate storage means stores an equipment certificate issued to each of the unit devices by an equipment certificate issuer in accordance with a public key encryption method. The equipment certificate includes an equipment certificate body and a digital signature generated for the equipment certificate body by a secret key to the equipment certificate issuer. The equipment certificate body includes identification information for a public key of or for secret information to generate a message authentication code of the unit device to which the authentication constituting process belongs, unit device specifying information to specify the unit device to which the authentication constituting process belongs, and equipment certificate issuer information to specify the equipment certificate issuer.

The evaluation report storage means stores an evaluation report. The evaluation report includes the unit device specifying information, biometric authentication constituting process information to specify a biometric authentication constituting process including a biometric authentication algorithm used for the execution of the authentication constituting process, and biometric authentication accuracy indicating the accuracy of the biometric authentication by the biometric authentication algorithm.

The secret information storage means stores secret information to generate the authenticator.

The authentication constituting process executing means executes the authentication constituting process when each of the unit devices receives, from the unit integrating device, a random challenge value generated by the service providing device, and an authentication constituting process execution request to request the execution of the authentication constituting process.

The authenticator generating means generates the authenticator by the use of the secret information in accordance with the equipment certificate, the evaluation report, the challenge value, and the execution result.

The authentication context generating means generates an authentication context. The equipment certificate, the evaluation report, the challenge value, the execution result, and the authenticator are described in the authentication context in a specific format.

The authentication constituting process result information generating means generates authentication constituting process result information in which the authentication context and the execution result of the authentication constituting process are described in a specific format.

The result information sending means sends the authentication constituting process result information to the unit integrating device.

At least one of the unit devices further comprises user identification information certificate storage means.

The user identification information certificate storage means stores a user identification information certificate issued to a user of the user terminal by a third-party organization in accordance with a public key encryption method. The user identification information certificate includes a certificate body and a digital signature generated for the certificate body by a secret key to the third-party organization. The certificate body includes user identification information to identify the user, a hash value of biometric referential information for the user, and the third-party organization information to identify the third-party organization.

The authenticator generating means of at least one of the unit devices generates the authenticator by the use of the secret information in accordance with the equipment certificate, the evaluation report, the challenge value, the user identification information certificate, and the execution result.

The authentication context generating means of at least one of the unit devices generates an authentication context. The equipment certificate, the evaluation report, the challenge value, the user identification information certificate, the execution result, and the authenticator are described in the authentication context in a specific format.

The unit integrating device comprises a device information storage means, a first authentication constituting process execution request sending means, a second authentication constituting process execution request sending means, an authentication processing result information generating means, and an authentication processing result information sending means.

The device information storage means stores, in association with one another, unit device specifying information for each of the unit devices, a function name indicating a function in an authentication constituting process executed by each of the unit devices, and a processing order indicating the order of processing the functions.

The first authentication constituting process execution request sending means sends the challenge value and the authentication constituting process execution request to the unit device specified by the unit device specifying information in accordance with the processing order and the unit device specifying information in the device information storage means in response to an authentication processing execution request to request the execution of the authentication processing and the challenge value from the user terminal.

The second authentication constituting process execution request sending means sends the challenge value and the authentication constituting process execution request to the unit device subsequent to the sending destination unit device in the processing order in accordance with the processing order and the unit device specifying information in the device information storage means in response to the authentication constituting process result information from the unit device which is a sending destination of the authentication constituting process execution request.

The authentication processing result information generating means generates authentication processing result information in accordance with the processing order and the unit device specifying information in the unit device constituting information in response to the authentication constituting process result information from the unit device which is a sending destination of the authentication constituting process execution request when the sending destination unit device is the last unit device in the processing order. The authentication context in the authentication constituting process result information received from each of the unit devices and the execution result in the authentication constituting process result information received from the last unit device in the processing order are described in the authentication processing result information in a specific format.

The authentication processing result information sending means sends the authentication processing result information to the user terminal.

The user terminal comprises service request sending means, authentication processing execution request sending means, transfer means, and display.

The service request sending means sends, to the service providing device, a service request to request a service to the service providing device.

The authentication processing execution request sending means sends, to the unit integrating device, the challenge value and the authentication processing execution request in response to an authentication request which requests the user to perform the biometric authentication, and the challenge value from the service providing device.

The transfer means transfers, to the service providing device, authentication processing result information received from the unit integrating device.

The display means displays service information received from the service providing device.

The service providing device comprises a user information storage means, a service providing policy storage means, an authentication request sending means, a read means, and a service information sending means.

The user information storage means stores, in association with each other, user identification information in the user identification information certificate, and service user identification information which has a value different from that of the user identification information to identify the user.

The service providing policy storage means stores a service providing policy indicating conditions for providing services to the user. The service providing policy includes service identification information to identify the service, unit device specifying information used for the execution of the authentication constituting processes, the biometric authentication constituting process information to specify a biometric authentication constituting process including a biometric authentication algorithm, and a reference value indicating a reference for regarding the accuracy of the biometric authentication by the biometric authentication algorithm as proper.

The authentication request sending means generates and holds the challenge value and sends the challenge value and the authentication request to the user terminal in response to a service request from the user terminal.

The sending means sends the held challenge value, the authentication processing result information, and the service providing policy to the verifying device in response to authentication processing result information from the user terminal.

The read means searches the user information storage means in accordance with the user identification information and reads service user identification information associated with the user identification information in response to user identification information and a verification result from the verifying device when the verification result is proper.

The service information sending means sends the service information to the user terminal in accordance with the read service user identification information.

The verifying device comprises a public key storage means, a receiving means, a format verifying means, an authenticator verifying means, an equipment certificate verifying means, a user identification information certificate verifying means, an evaluation report verifying means, a challenge value verifying means, an execution result verifying means, and a user identification information sending means.

The public key storage means stores a public key to the equipment certificate issuer of each of the unit devices and a public key to the third-party organization.

The receiving means receives, from the service providing device, the challenge value, the authentication processing result information, and the service providing policy.

The format verifying means verifies that the received authentication processing result information fits the specific format.

The authenticator verifying means verifies an authenticator in the authentication context described in the received authentication processing result information.

The equipment certificate verifying means verifies the digital signature in the equipment certificate included in the authentication context described in the received authentication processing result information in accordance with the public key to the equipment certificate issuer.

The user identification information certificate verifying means verifies the digital signature in the user identification information certificate included in the authentication context described in the received authentication processing result information in accordance with the public key to the third-party organization.

The evaluation report verifying means verifies the evaluation report included in the authentication context described in the received authentication processing result information in accordance with the received service providing policy.

The challenge value verifying means verifies the challenge value in the authentication context described in the received authentication processing result information in accordance with the received challenge value.

The execution result verifying means verifies that the execution result described in the received authentication processing result information is proper.

The user identification information sending means sends, to the service providing device, the user identification information in the user identification information certificate used for the verification by the user identification information certificate verifying means and the execution result that indicates properness when all the verification results by the format verifying means, the authenticator verifying means, the equipment certificate verifying means, the user identification information certificate verifying means, the evaluation report verifying means, the challenge value verifying means, and the execution result verifying means are proper.

### Brief Description of Drawings

FIG. 1 is a schematic diagram showing the configuration of a service providing system according to a first embodiment;
FIG. 2 is a schematic diagram illustrating a service process according to the embodiment;
FIG. 3 is a schematic diagram illustrating a storage unit 23 according to the embodiment;
FIG. 4 is a schematic diagram showing the configuration of a unit integrating device 30 according to the embodiment;
FIG. 5 is a schematic diagram illustrating a device information storage unit 33 according to the embodiment;
FIG. 6 is a schematic diagram showing the configurations of unit devices 40 and 50 according to the embodiment;
FIG. 7 is a schematic diagram illustrating an equipment certificate storage unit 44 according to the embodiment;
FIG. 8 is a schematic diagram illustrating an equipment certificate storage unit 54 according to the embodiment;
FIG. 9 is a schematic diagram illustrating user unique information 55a according to the embodiment;
FIG. 10 is a schematic diagram illustrating a first authentication context c1 according to the embodiment;
FIG. 11 is a schematic diagram illustrating a second authentication context c2 according to the embodiment;
FIG. 12 is a schematic diagram illustrating first authentication constituting process result information b1 according to the embodiment;
FIG. 13 is a schematic diagram illustrating second authentication constituting process result information b2 according to the embodiment;
FIG. 14 is a schematic diagram illustrating authentication processing result information b according to the embodiment;
FIG. 15 is a schematic diagram illustrating a storage unit 63 according to the embodiment;
FIG. 16 is a flowchart illustrating operations in steps ST1 to ST7 according to the embodiment;
FIG. 17 is a flowchart illustrating operations in steps ST8 to ST16 according to the embodiment;
FIG. 18 is a flowchart illustrating operations in steps ST17 to ST26 according to the embodiment;
FIG. 19 is a flowchart illustrating operations in steps ST27 to ST40 according to the embodiment;
FIG. 20 is a flowchart illustrating operations in steps ST41 to ST47 according to the embodiment;
FIG. 21 is a schematic diagram showing the configuration of a service providing system according to a second embodiment;
FIG. 22 is a schematic diagram illustrating a device information storage unit 33 according to the embodiment;
FIG. 23 is a schematic diagram illustrating a storage unit 23 according to the embodiment;
FIG. 24 is a schematic diagram illustrating a storage unit 63 according to the embodiment;
FIG. 25 is a schematic diagram illustrating authentication processing result information b according to the embodiment;
FIG. 26 is a flowchart illustrating operations according to the embodiment;
FIG. 27 is a schematic diagram illustrating a storage unit 63 according to a third embodiment;
FIG. 28 is a schematic diagram illustrating a storage unit 23 according to the embodiment; and
FIG. 29 is a flowchart illustrating operations in steps ST40 to ST47 according to the embodiment.

### Description of Embodiments

Hereinafter, embodiments will be described with reference to the drawings. Each of the following devices can be embodied by a hardware configuration, or a combinational configuration of a hardware resource and software. As the software of the combinational configuration, a program which is previously installed in a computer of a corresponding device from a network or a storage medium and which enables the functions of the corresponding device is used.

### (First Embodiment)

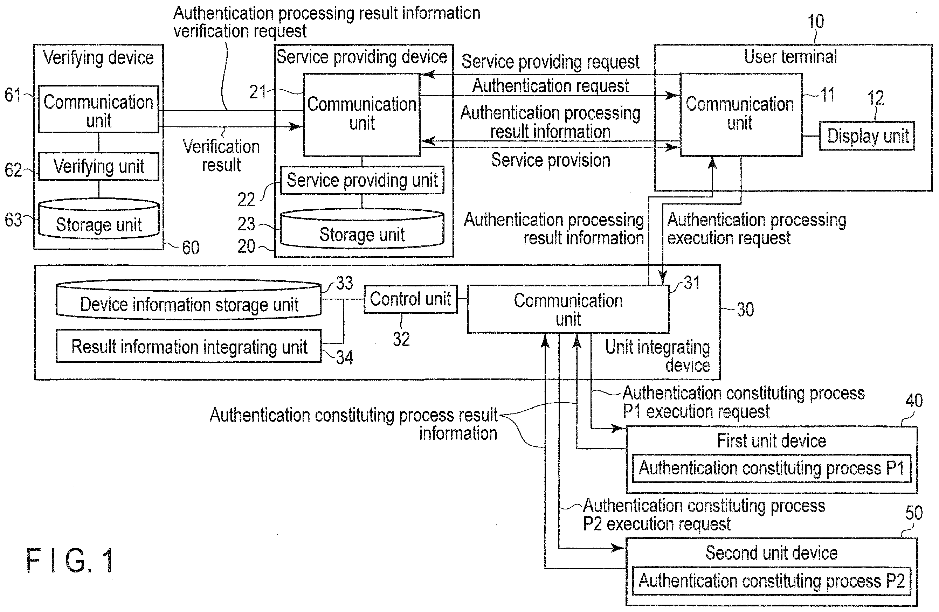

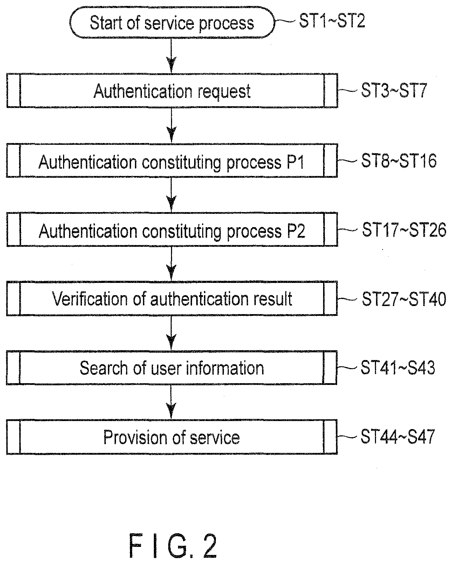

FIG. 1 is a schematic diagram showing the configuration of a service providing system according to a first embodiment. FIG. 2 is a schematic diagram illustrating a service process in the system. As shown in FIG. 2, the service process comprises an authentication request process, two authentication constituting processes P1 and P2, an authentication result verification process, a user information search process, and a service providing process. In the service process, an authentication result is verified in accordance with the execution results of the authentication constituting processes P1 and P2, user information is searched in accordance with the authentication verification result, and a service is provided in accordance with the user information. Each of the authentication constituting processes P1 and P2 is executed by one of different first and second unit devices 40 and 50. In the example shown here, the authentication constituting process P1 is executed by the first unit device 40, and the authentication constituting process P2 is executed by the second unit device 50.

Here, authentication processing refers to processing for checking whether a target (e.g., a person or a device) to be authenticated is proper. Being proper means that a standard by which a verifier approves of is satisfied. The authentication constituting process refers to a process that constitutes the authentication processing. For example, in authentication processing that uses biometric information, the authentication constituting process includes, 1) reading of biometric information, and 2) extraction of feature information. The 1) and 2) may be collectively referred to as one authentication constituting process.

The authentication processing comprises one or more authentication constituting processes, and these authentication constituting processes may be executed by different unit devices. A subsequent authentication constituting process may be executed with or without reference to a previous authentication constituting process.

The service providing system comprises a user terminal 10, a service providing device 20, a unit integrating device 30, the first unit device 40, the second unit device 50, and a verifying device 60. The unit devices 40 and 50 independently execute the authentication constituting processes P1 and P2 constituting the authentication processing that uses biometric information. For example, a fingerprint sensor or a CCD camera can be suitably used as the first unit device 40. For example, a SIM card, an IC card, or a micro SD card can be suitably used as the second unit device 50. For example, a mobile telephone can be used as the unit integrating device 30, and can have each of the unit devices 40 and 50 provided therein or externally connected thereto to communicate with each of the unit devices 40 and 50. For connection to an external storage medium, various cards serving as storage media and an interface such as a universal serial bus (USB) can be suitably used. The user terminal 10 can have the unit integrating device 30 provided therein or externally connected thereto to communicate with the unit integrating device 30. The verifying device 60 verifies the execution contents of each of the authentication constituting processes P1 and P2 in accordance with an authenticator. The service providing device 20 can communicate with the user terminal 10 and the verifying device 60.

Here, the user terminal 10 has a normal computer function, and comprises, for example, a communication unit 11 and a display unit 12.

The communication unit 11 has, for example, the following functions (f11-1) to (f11-3):
(f11-1) A service request sending function to send, to the service providing device 20, a service request to request a service to the service providing device 20.
(f11-2) An authentication processing execution request sending function to send a challenge value and processing execution request to the unit integrating device 30 in response to an authentication request which requests a user to perform a biometric authentication, and the random challenge value generated by the service providing device 20 from the service providing device 20.
(f11-3) A transfer function to transfer, to the service providing device 20, authentication processing result information received from the unit integrating device 30.

The display unit 12 has, for example, a display function to display service information received from the service providing device 20.

The service providing device 20 comprises a communication unit 21, a service providing unit 22, and a storage unit 23.

The communication unit 21 is a communication interface between the service providing unit 22 and each of the devices 10 and 60. The following explanations do not mention that a communication is performed through the communication unit 21.

The service providing unit 22 has, for example, the following functions (f22-1) to (f22-4):
(f22-1) An authentication request sending function to generate and hold a challenge value and send the challenge value and an authentication request to the user terminal 10 in response to a service request from the user terminal 10.
(f22-2) A sending function to send the held challenge value, the authentication processing result information, and a service providing policy to the verifying device 60 in response to the authentication processing result information from the user terminal 10.
(f22-3) A read function to search the storage unit 23 in accordance with the user identification information and read service user identification information associated with the user identification information in response to user identification information and a verification result from the verifying device 60 when the verification result is proper.
(f22-4) A service information sending function to send service information to the user terminal 10 in accordance with the read service user identification information.

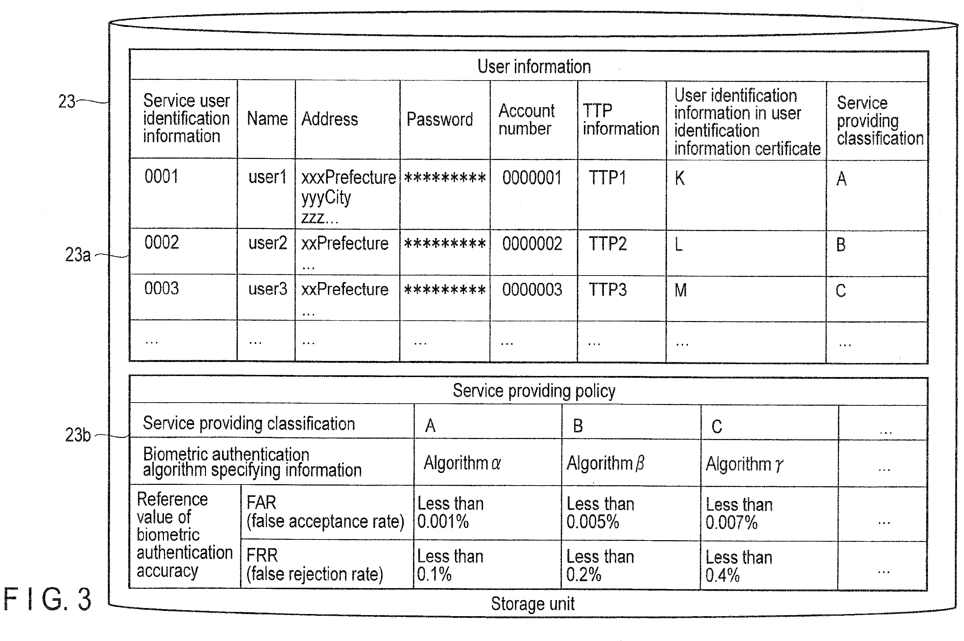

As shown in FIG. 3, user information 23a and a service providing policy 23b are stored in the storage unit 23.

The user identification information in a user identification information certificate, and the service user identification information which has a value different from that of the user identification information to identify a user are described in the user information 23a in association with each other. The service user identification information is, for example, a credit card number or a bank card number, and is identification information provided to the user by an operator (e.g., a credit sales company or a bank) of the service providing device 20. As the user information 23a, it is possible to suitably use a user name, an address, a password, an account number, trusted third party (TTP, also briefly referred to as a third-party organization) information, the user identification information in the user identification information certificate, a service providing classification that indicates the classification of service provision, and address information for the user terminal 10. The service information is, for example, information for users that can be provided by a credit sales company (e.g., usage state reference and a guide for discount service member stores), and is stored in an unshown storage unit (not shown).

The service providing policy 23b indicates conditions for providing services, and includes, for example, the service providing classification that indicates the classification of service provision, unit device specifying information (information to specify the first unit device 40 and the unit device 50) used for the execution of the authentication constituting processes, biometric authentication constituting process information to specify a biometric authentication constituting process including a biometric authentication algorithm, and a reference value indicating a reference for regarding the accuracy of the biometric authentication by the biometric authentication algorithm as proper. As the reference value, it is possible to suitably use, for example, a false acceptance rate (FAR) and/or a false rejection rate (FRR).

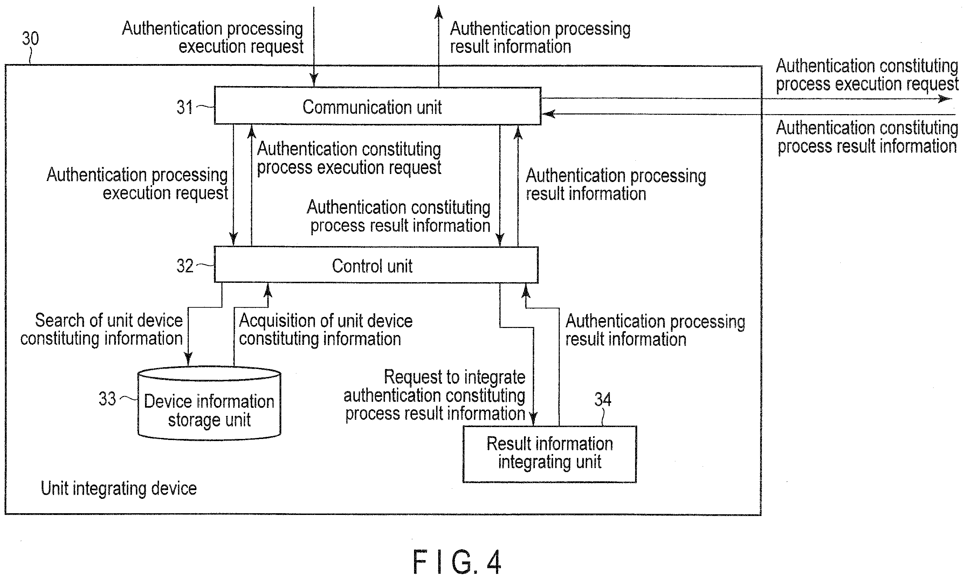

As shown in FIG. 4, the unit integrating device 30 comprises a communication unit 31, a control unit 32, a device information storage unit 33, and a result information integrating unit 34.

The communication unit 31 is a communication interface between the control unit 32 and each of the devices 10, 40, and 50. The following explanations do not mention that a communication is performed through the communication unit 31.

The control unit 32 has, for example, the following functions (f32-1) to (f32-4):
(f32-1) A first authentication constituting process execution request sending function to send the challenge value and the authentication constituting process execution request to the unit device 40 specified by the unit device specifying information in accordance with the processing order and the unit device specifying information in the device information storage unit 33 in response to an authentication processing execution request to request the execution of authentication processing and a challenge value from the user terminal 10.
(f32-2) A second authentication constituting process execution request sending function to send a challenge value and an authentication constituting process execution request to the unit device 50 subsequent to the sending destination unit device 40 in the processing order in accordance with the processing order and the unit device specifying information in the device information storage unit 33 in response to authentication constituting process result information from the first unit device 40 which is a sending destination of the authentication constituting process execution request.
(f32-3) An authentication processing result information generating function to generate authentication processing result information in accordance with the processing order and the unit device specifying information in unit device constituting information in response to the authentication constituting process result information from the unit device 50 which is a sending destination of the authentication constituting process execution request when the sending destination unit device 50 is the last unit device in the processing order. An authentication context in the authentication constituting process result information received from each of the unit devices 40 and 50 and the execution result in the authentication constituting process result information received from the last unit device in the processing order are described in the authentication processing result information in a specific format. This authentication processing result information generating function (f32-3) may be enabled, for example, by sending, to the result information integrating unit 34, the authentication constituting process result information received from each of the unit devices 40 and 50 and authentication constituting process result information integrating request and receiving authentication processing result information from the result information integrating unit 34.
(f32-4) An authentication processing result information sending function to send the authentication processing result information to the user terminal 10.

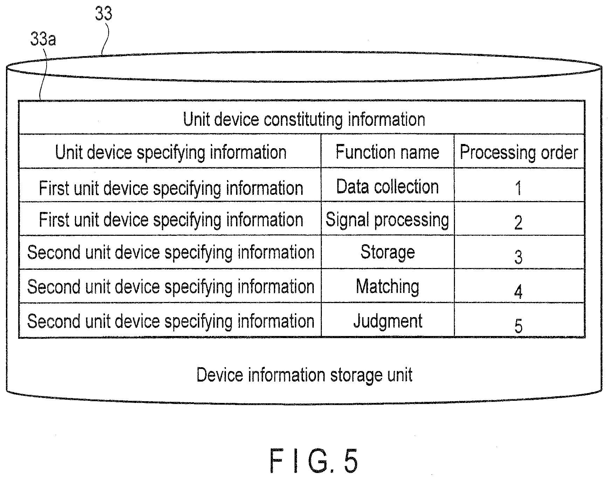

As shown in FIG. 5, a unit device constituting information 33a is stored in the device information storage unit 33. Unit device specifying information for each unit device, a function name indicating a function in an authentication constituting process executed by each unit device, and a processing order indicating the order of processing the functions are described in the unit device constituting information 33a in association with one another.

The result information integrating unit 34 integrates the authentication constituting process result information received from the control unit 32 and then sends the authentication processing result information to the control unit 32.

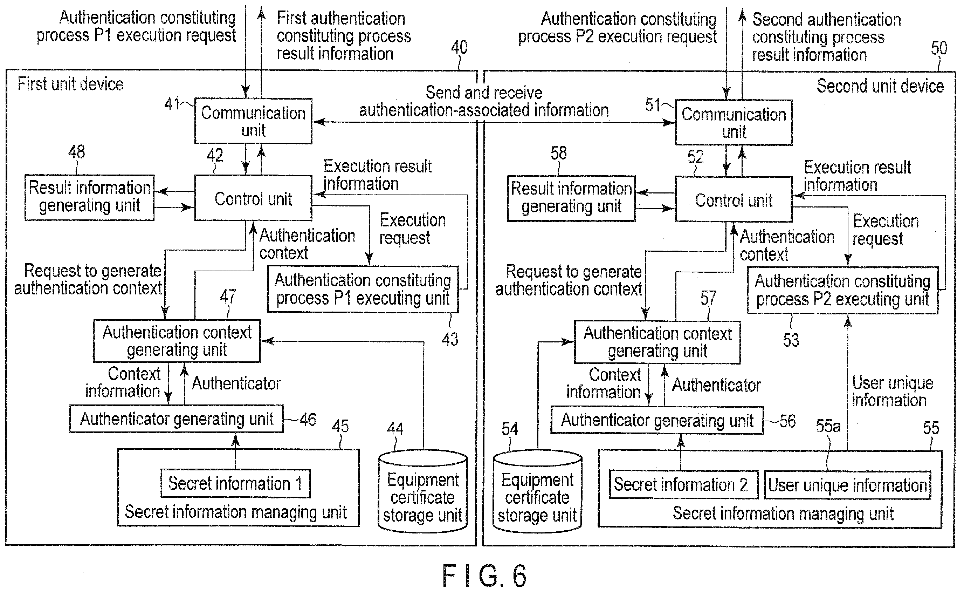

As shown in FIG. 6, the first and second unit devices 40 and 50 comprise communication units 41 and 51, control units 42 and 52, secret information managing units 45 and 55, authenticator generating units 46 and 56, equipment certificate storage units 44 and 54, authentication context generating units 47 and 57, and result information generating units 48 and 58. The first unit device 40 comprises an authentication constituting process P1 executing unit 43. The sending destination unit device 50 comprises an authentication constituting process P2 executing unit 53.

Here, the communication units 41 and 51 are communication interfaces between the control units 42 and 52a and the devices 30, 50, and 40. The following explanations do not mention that a communication is performed through the communication units 41 and 51.

The control units 42 and 52 have a function to control the units 41, 43 to 48 and 51, 53 to 58 to create authentication constituting process result information in accordance with the authentication constituting process execution request received from the unit integrating device 30 and send the authentication constituting process result information to the unit integrating device 30.

The control units 42 and 52 have, for example, the following functions (f42-1 and f52-1):
(f42-1 and f52-1) A function to send an execution request to the authentication constituting process P1 executing unit 43 and the authentication constituting process P2 executing unit 53 in response to a random challenge value generated by the service providing device 20 and an authentication constituting process execution request that requests the execution of the authentication constituting process from the unit integrating device 30.
(f42-2 and f52-2) A function to send, to the authentication context generating units 47 and 57, execution results and challenge values in the authentication constituting process P1 executing unit 43 and the execution result in the authentication constituting process P2 executing unit 53.
(f42-3 and f52-3) A function to send, to the result information generating units 48 and 58, authentication contexts sent from the authentication context generating units 47 and 57 and the execution results in the executing units 43 and 53.
(f42-4 and f52-4) A function to send, to the unit integrating device 30, the authentication constituting process result information sent from the result information generating units 48 and 58.

In response to an execution request from the control unit 42, the authentication constituting process P1 executing unit 43 executes an authentication constituting process P1, and sends the execution result to the control unit 42.

In response to an execution request from the control unit 52, the authentication constituting process P2 executing unit 53 reads user unique information 55a from the secret information managing unit 55, executes an authentication constituting process P2, and sends the execution result and the user identification information certificate in the user unique information 55a to the control unit 52.

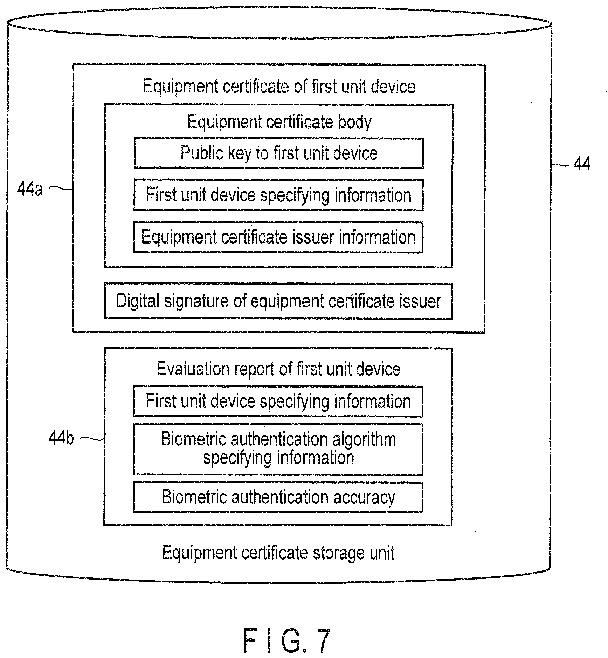

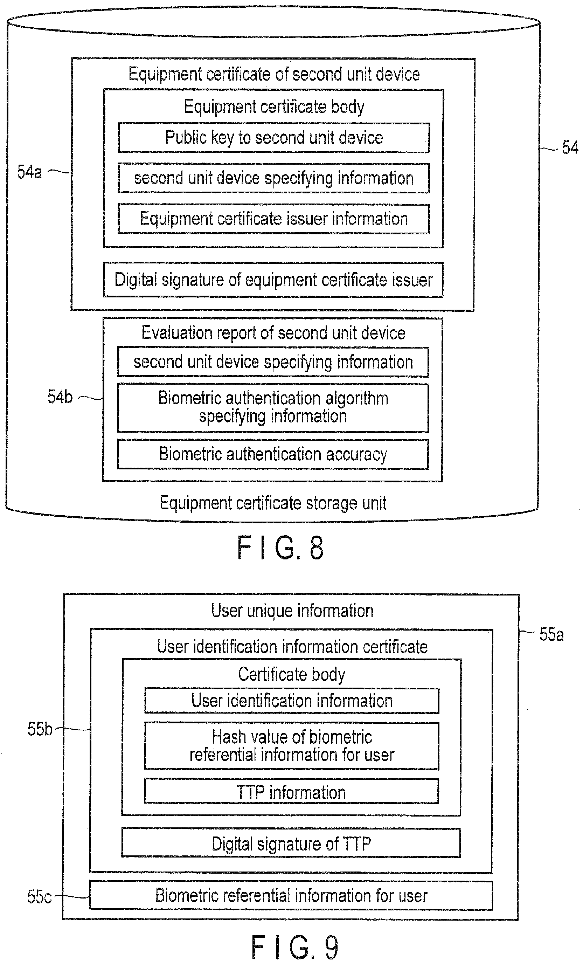

As shown in FIG. 7 and FIG. 8, equipment certificates (equipment public key certificates) 44a and 54a of the devices 40 and 50 and, and evaluation reports 44b and 54b of the devices are stored in the equipment certificate storage units 44 and 54.

The equipment certificates 44a and 54a are issued to the unit devices 40 and 50 by an equipment certificate issuer in accordance with a public key encryption method. The equipment certificates 44a and 54a include an equipment certificate body and a digital signature generated for the equipment certificate body by a secret key to the equipment certificate issuer. The equipment certificate body including identification information for a public key of or for secret information to generate a message authentication code of the unit device to which the authentication constituting processes P1 and P2 belong, unit device specifying information to specify the unit devices 40 and 50 to which the authentication constituting processes P1 and P2 belong, and equipment certificate issuer information to specify the equipment certificate issuer. Here, the "information corresponding to the secret information" indicates information to specify a public key such as a public certificate. This also applies to the explanations in the following embodiments. The equipment certificate body may further comprise data on items including a field, a version, a serial number of the equipment certificate, a signature algorithm, an expiration date, and a biometric authentication device manufacturer.

The evaluation reports 44b and 54b include unit device specifying information (first unit device specifying information in FIG. 7 and second unit device specifying information in FIG. 8) for the authentication constituting processes P1 and P2, biometric authentication constituting process information to specify a biometric authentication constituting process including a biometric authentication algorithm used for execution, and biometric authentication accuracy indicating the accuracy of the biometric authentication by the biometric authentication algorithm. As the biometric authentication accuracy, it is possible to suitably use, for example, accuracy that fulfils a standardized matching accuracy evaluation reference (e.g., the aforementioned FRR or FAR) defined by a standardization association.

Evaluation items such as security may be attached to the evaluation reports 44b and 54b. An issuer of the evaluation reports 44b and 54b issues evaluation reports to the unit devices 40 and 50 authorized by, for example, a certificate authority (CA) based on a public key infrastructure. This certificate authority functions to evaluate and authorize biometric authentication accuracy that indicates the accuracy of the biometric authentication by the biometric authentication algorithm in the unit devices 40 and 50 in response to an application from a manufacturer of the unit devices 40 and 50. The certificate authority also functions to send the evaluation of the authorized contents to the requested manufacturer, and may add an electronic signature to the evaluation.

Secret information 1 for previously generating an authenticator is stored in the secret information managing unit 45. A secret key (not shown) corresponding to the public key to the first unit device 40 in the aforementioned equipment certificate 44a is also stored in the secret information managing unit 45.

Secret information 2 for previously generating an authenticator, and the user unique information 55a unique to the user are stored in the secret information managing unit 55. A secret key (not shown) corresponding to the public key to the second unit device 50 in the aforementioned equipment certificate 54a is also stored in the secret information managing unit 55.

It is also possible to use identification information for secret information for the generation of a message authentication code (MAC) instead of the public keys in the equipment certificates 44a and 54a (the public key to the first unit device in FIG. 7, and the public key to the second unit device in FIG. 8).

Here, the secret information 1 and the secret information 2 are provided to the first unit device and the second unit device, respectively. The secret information 1 or 2 is a pair of a secret key and a public key in the public key encryption method, for example, when the authenticator is a digital signature. The secret information 1 or 2 is a common key previously shared with the verifying device 60, for example, when the authenticator is a message authentication code. When the authenticator is a digital signature, public key certificates which correspond to the secret keys and which have been previously issued from the authority are stored in the secret information managing units 45 and 55. Although these public key certificates are assumed to be different from the aforementioned equipment certificates 44a and 54a, the aforementioned equipment certificates 44a and 54a may be used. When the equipment certificates 44a and 54a are used as the public key certificates, an authenticator is generated in accordance with the secret keys corresponding to the public keys to the unit devices 40 and 50.

As shown in FIG. 9, the user unique information 55a includes a user identification information certificate 55b. The user unique information 55a may further include user biometric referential information 55c.

The user identification information certificate 55b is issued to the user of the user terminal 10 by a third-party organization (TTP) in accordance with the public key encryption method. The user identification information certificate 55b includes a certificate body and a digital signature generated for the certificate body by a secret key to the TTP. The certificate body includes user identification information to identify the user, a hash value of biometric referential information for the user, and the TTP information to identify the TTP. The user identification information in the user identification information certificate 55b is provided by the TTP.

The authenticator generating units 46 and 56 generate an authenticator for input data by the use of secret information read from the secret information managing units 45 and 55. As the authenticator, it is possible to suitably use, for example, a digital signature or a message authentication code.

Here, the authenticator generating unit 46 functions to generate an authenticator by the use of the secret information 1 in the secret information managing unit 45 in accordance with the equipment certificate 44a, the evaluation report 44b, the challenge value, and the hash value of the execution result of the authentication constituting process P1 as execution contents that are received from the authentication context generating unit 47. The authenticator generating unit 46 also functions to send the generated authenticator to the authentication context generating unit 47.

The authenticator generating unit 56 functions to generate an authenticator by the use of the secret information 2 in the secret information managing unit 55 in accordance with the equipment certificate 54a, the evaluation report 54b, the challenge value, the user identification information certificate 55b, and the hash value of the execution result of the authentication constituting process P2 as execution contents that are received from the authentication context generating unit 57. The authenticator generating unit 56 also functions to send the generated authenticator to the authentication context generating unit 57.

The authentication context generating units 47 and 57 form, into a specific format, information regarding the execution of the authentication constituting process P1 executing unit 43 and the authentication constituting process P2 executing unit 53 and the authenticators output by the authenticator generating units 46 and 56, and output the results. In this text, formed information that is not easily put into the specific format by the authentication context generating units 47 and 57 is described as an authentication context.

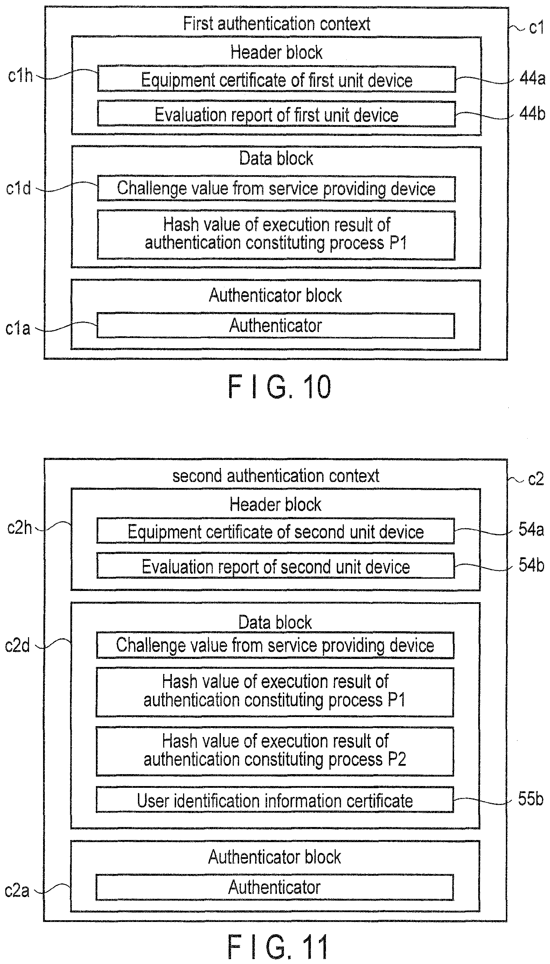

Here, as shown in FIG. 10, the authentication context generating unit 47 functions to generate a first authentication context c1. In the first authentication context c1, the equipment certificate 44a and the evaluation report 44b in the equipment certificate storage unit 44, the challenge value and the execution contents received from the control unit 42, and the authenticator received from the authenticator generating unit 46 are described in a specific format. The authentication context generating unit 47 also functions to send the generated first authentication context c1 to the control unit 42.

The first authentication context c1 comprises, for example, a header block c1h, a data block c1d, and an authenticator block c1a.

The equipment certificate 44a and the evaluation report 44b in the first unit device 40 are described in the header block c1h. The first unit device specifying information to specify the first unit device 40, and information regarding the structure of the first authentication context c1 may be further described in the header block c1h.

The challenge value from the service providing device 20, and the hash value of the execution result of the authentication constituting process P1 as execution contents are described in the data block c1d. Information included in an authentication constituting process P1 execution request may be further described in the data block c1d.

The authenticator received from the authenticator generating unit 46 is described in the authenticator block c1a.

As shown in FIG. 11, the authentication context generating unit 57 functions to generate a second authentication context c2. In the second authentication context c2, the equipment certificate 54a and the evaluation report 54b in the equipment certificate storage unit 54, the challenge value and the execution contents received from the control unit 52, and the authenticator received from the authenticator generating unit 56 are described in a specific format. The authentication context generating unit 57 also functions to send the generated second authentication context c2 to the control unit 52.

The second authentication context c2 comprises, for example, a header block c2h, a data block c2d, and an authenticator block c2a.

The equipment certificate 54a and the evaluation report 54b in the second unit device 50 are described in the header block c2h. The second unit device specifying information to specify the second unit device 50, and information regarding the structure of the second authentication context c2 may be further described in the header block c2h.

The challenge value from the service providing device 20, the hash value of the execution result of the authentication constituting process P2 as execution contents, and the user identification information certificate 55b of the user are described in the data block c2d. Data corresponding to the hash value of the execution result of the authentication constituting process P1 is further stored in the data block c2d. This means that the data corresponding to the hash values of the respective execution results are stored so that the execution result of the authentication constituting process P1 as an input and the execution result of the authentication constituting process P2 as an output are a pair of data. Information included in an authentication constituting process P2 execution request may be further described in the data block c2d.

The authenticator received from the authenticator generating unit 56 is described in the authenticator block c2a.

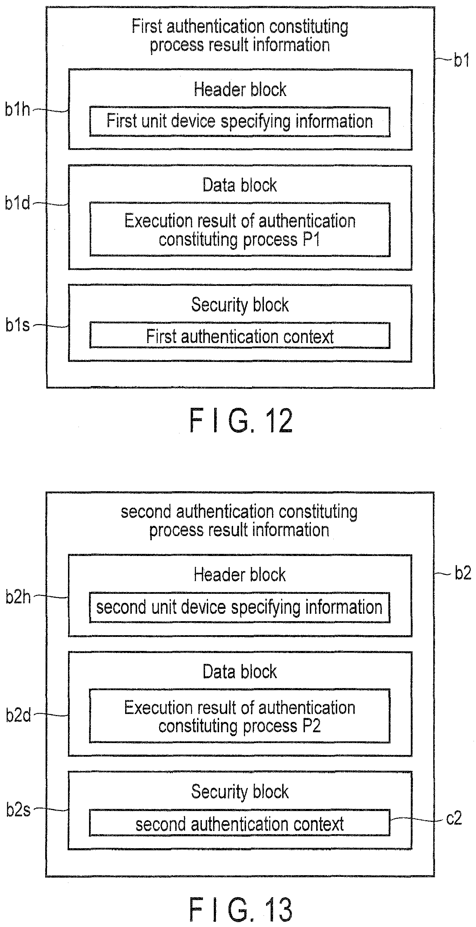

As shown in FIG. 12, the result information generating unit 48 functions to generate first authentication constituting process result information b1. In the first authentication constituting process result information b1, the first authentication context c1 received from the control unit 42, and the execution result of the authentication constituting process P1 are described in a specific format. The result information generating unit 48 also functions to send the generated first authentication constituting process result information b1 to the control unit 42.

The first authentication constituting process result information b1 comprises, for example, a header block b1h, a data block b1d, and a security block b1s.

First unit device specifying information similar to that in the equipment certificate 44a within the first authentication context c1 is described in the header block b1h. Information regarding the structure of the first authentication constituting process result information b1 may be further described in the header block b1h.

The execution result of the authentication constituting process P1 by the authentication constituting process P1 executing unit 43 is described in the data block b1d.

The first authentication context c1 is described in the security block b1s. Information regarding the encryption of the data block b1d, authenticators provided to the header block b1h and the data block b1d, and information regarding the authenticators may be further described in the security block b1s.

As shown in FIG. 13, the result information generating unit 58 functions to generate second authentication constituting process result information b2. In the second authentication constituting process result information b2, the second authentication context c2 received from the control unit 52, and the execution result of the authentication constituting process P2 are described in a specific format. The result information generating unit 58 also functions to send the generated second authentication constituting process result information b2 to the control unit 52.

The second authentication constituting process result information b2 comprises, for example, a header block b2h, a data block b2d, and a security block b2s.

Second unit device specifying information similar to that in the equipment certificate 54a within the second authentication context c2 is described in the header block b2h. Information regarding the structure of the second authentication constituting process result information b2 may be further described in the header block b2h.

The execution result of the authentication constituting process P2 by the authentication constituting process P2 executing unit 53 is described in the data block b2d.

The second authentication context c2 is described in the security block b2s. Information regarding the encryption of the data block b2d, authenticators provided to the header block b2h and the data block b2d, and information regarding the authenticators may be further described in the security block b2s. The security block b2s may further include the first authentication context c1 included in the security block b1s of the first authentication constituting process result information b1.

As described above, the first authentication constituting process result information b1 and the second authentication constituting process result information b2 are integrated into authentication processing result information b by the unit integrating device 30.

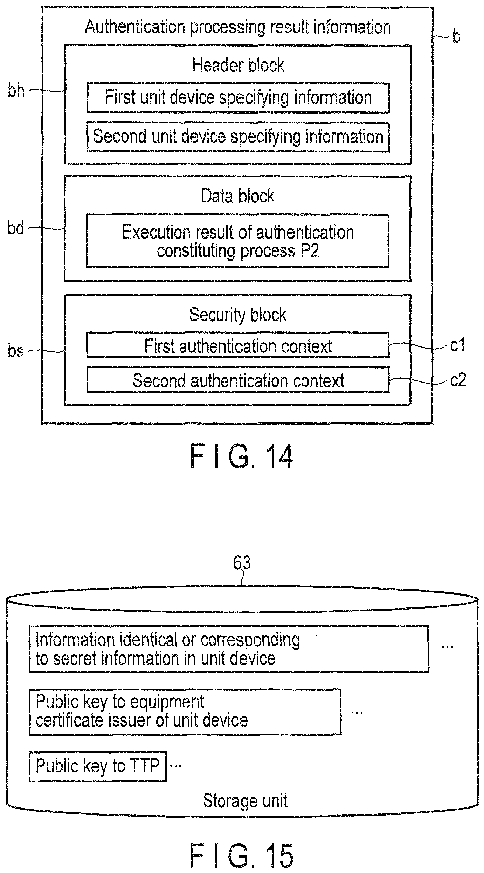

As shown in FIG. 14, the authentication processing result information b comprises, for example, a header block bh, a data block bd, and a security block bs. The header block bh and the data block bd may be omitted as required by a system.

First and second unit device specifying information extracted from the header blocks b1h and b2h in the first authentication constituting process result information b1 and the second authentication constituting process result information b2 are described in the header block bh. Information regarding the structure of the authentication processing result information b may be further described in the header block bh.

The execution result of the authentication constituting process P2 extracted from the data block b2d in the second authentication constituting process result information b2 is described in the data block bd.

The first and second authentication contexts c1 and c2 extracted from the security blocks b1s and b2s in the first authentication constituting process result information b1 and the second authentication constituting process result information b2 are described in the security block bs. Information regarding the encryption of the data block bd, authenticators provided to the header block bh and the data block bd, and information regarding the authenticators may be further described in the security block bs.

As shown in FIG. 1, the verifying device 60 comprises a communication unit 61, a verifying unit 62, and a storage unit 63.

The communication unit 61 is a communication interface between the verifying unit 62 and the service providing device 20. The following explanations do not mention that a communication is performed through the communication unit 61.

The verifying unit 62 has, for example, the following functions (f62-1) to (f62-9):
(f62-1) A receiving function to receive, from the service providing device 20, the challenge value, the authentication processing result information b, and the service providing policy 23b.
(f62-2) A format verifying function to verify that the received authentication processing result information b fits the specific format.
(f62-3) An authenticator verifying function to verify authenticators in the authentication contexts c1 and c2 described in the received authentication processing result information b.
(f62-4) An equipment certificate verifying function to verify the digital signatures in the equipment certificates 44a and 54a included in the authentication contexts c1 and c2 described in the received authentication processing result information b in accordance with the public key to the equipment certificate issuer in the storage unit 63.
(f62-5) A user identification information certificate verifying function to verify the digital signature in the user identification information certificate 55b included in the authentication contexts c1 and c2 described in the received authentication processing result information b in accordance with the public key to the third-party organization in the storage unit 63.
(f62-6) An evaluation report verifying function to verify the evaluation reports 44b and 54b included in the authentication contexts c1 and c2 described in the received authentication processing result information b in accordance with the received service providing policy 23b.
(f62-7) A challenge value verifying function to verify the challenge values in the authentication contexts c1 and c2 described in the received authentication processing result information b in accordance with the received challenge value.
(f62-8) An execution result verifying function to verify that the execution result described in the received authentication processing result information b is proper.
(f62-9) A user identification information sending function to send, to the service providing device 20, the user identification information in the user identification information certificate 55b used for the verification by the user identification information certificate verifying function and the verification result that indicates properness when all the verification results by the format verifying function, the authenticator verifying function, the equipment certificate verifying function, the user identification information certificate verifying function, the evaluation report verifying function, the challenge value verifying function, and the execution result verifying function are proper.

The storage unit 63 is a storage device readable/writable from the verifying unit 62. As shown in FIG. 15, the public key to the equipment certificate issuer of each of the unit devices 40 and 50 and the public key to the TTP are stored in the storage unit 63. Information identical or corresponding to secret information 1 and secret information 2 for the unit devices 40 and 50 may be stored in the storage unit 63. The information in the storage unit 63 is omitted when the authenticator is generated by the secret key to each of the unit devices 40 and 50 (because the authenticator can be verified by the public key to each of the unit devices 40 and 50 in the equipment certificates 44a and 54a).

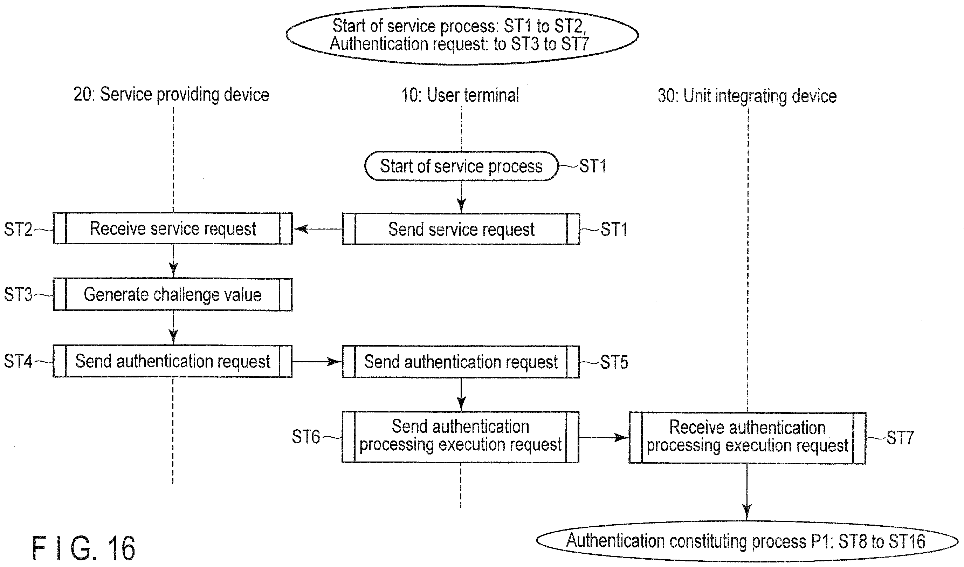

Now, the operation of the authentication system having the above configuration is described with reference to flowcharts in FIG. 2 and FIG. 16 to FIG. 20.

In the user terminal 10, the user selects a service in accordance with a screen displayed on the display unit 12. Accordingly, as shown in FIG. 10, a service request is sent to the service providing device 20 from the user terminal 10 (ST1), and a service process is thereby started. The service request may include, for example, the specification of an authentication method to be performed, and the specification of a method of communication between the user terminal 10 and the unit integrating device 30.

In the service providing device 20, when the service providing unit 22 receives the service request (ST2), the following authentication processing is performed in accordance with an authentication method that is predetermined or that is specified by the service request. The service providing unit 22 generates a challenge value comprising, for example, random numbers (ST3), and then holds the challenge value and sends this challenge value and an authentication request to the user terminal 10 (ST4). The authentication request may include, for example, information that specifies authentication processing, and information that specifies several matching algorithms.

In response to the challenge value and the authentication request (ST5), the user terminal 10 sends the challenge value and an authentication processing execution request to the unit integrating device 30 (ST6).

When the unit integrating device 30 receives the challenge value and the authentication processing execution request (ST7), the control unit 32 searches the unit device constituting information 33a of the device information storage unit 33 and thus judges the processing order of the first unit device 40 and the second unit device 50.

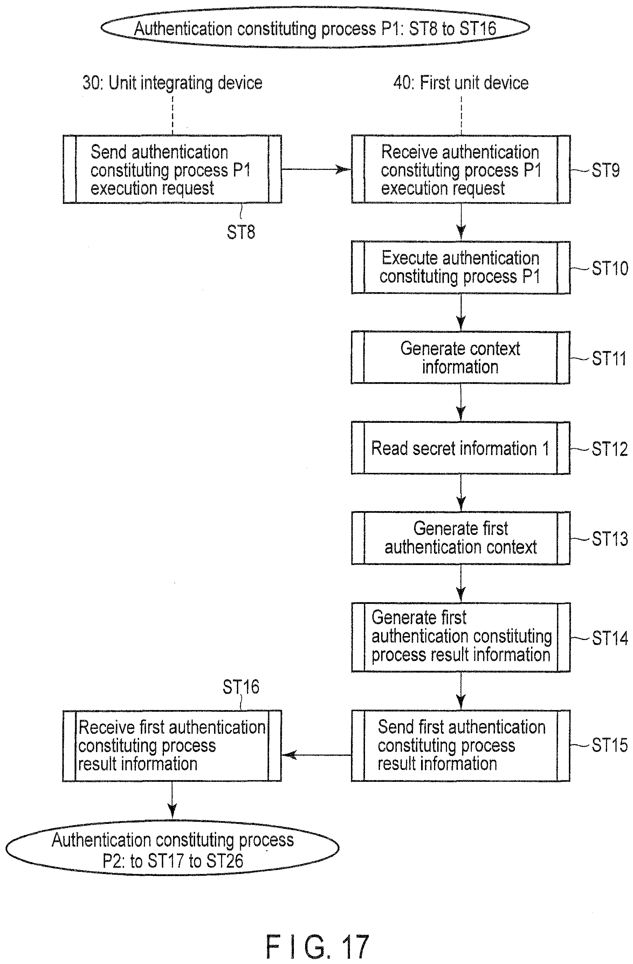

Subsequently, as shown in FIG. 17, the unit integrating device 30 sends a challenge value and an authentication constituting process P1 execution request to the first unit device 40 which comes first in the processing order (ST8).

When the first unit device 40 receives the challenge value and the authentication constituting process P1 execution request (ST9), the control unit 42 causes the authentication constituting process P1 executing unit 43 to execute the authentication constituting process P1 in accordance with authentication processing that is predetermined or that is specified by the authentication request from the service providing device 20, thereby obtaining an execution result (ST10). That is, as shown in FIG. 5 by way of example, the authentication constituting process P1 obtains, as an execution result, biometric information (e.g., fingerprint information) generated by a function of sequentially executing a data collection function for collecting biometric data for the user and a signal processing function for the signal processing of the collected biometric data.

The control unit 42 then sends, to the authentication context generating unit 47, the execution result of the authentication constituting process P1 and the challenge value from the service providing device 20.

The authentication context generating unit 47 describes the header block c1h and the data block c1d of the first authentication context c1 to generate context information comprising the blocks c1h and c1d (ST11), and sends the context information to the authenticator generating unit 46.

When receiving the context information, the authenticator generating unit 46 reads the secret information 1 for authenticator generation from the secret information managing unit 45 (ST12). The authenticator generating unit 46 then uses the secret information 1 to generate an authenticator in accordance with the context information, and sends the authenticator to the authentication context generating unit 47.

The authentication context generating unit 47 describes this authenticator in the authenticator block c1a, and generates a first authentication context c1 comprising three blocks c1h, c1d, and c1a (ST13).

When receiving the first authentication context c1 from the authentication context generating unit 47, the control unit 42 sends the first authentication context c1 and the execution result of the authentication constituting process P1 to the result information generating unit 48.

The result information generating unit 48 describes the first authentication context c1 and the execution result of the authentication constituting process P1 in a specific format to generate first authentication constituting process result information b1 (ST14), and sends the first authentication constituting process result information b1 to the control unit 42.

The control unit 42 uses the communication unit 41 to send the first authentication constituting process result information b1 to the unit integrating device 30 (ST15).

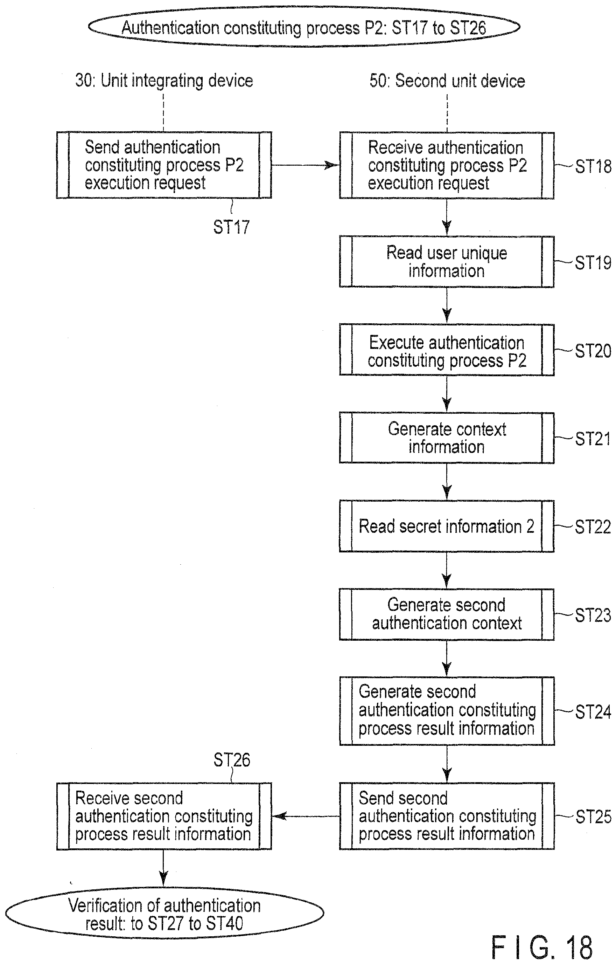

When the unit integrating device 30 receives the first authentication constituting process result information b1 (ST16), the control unit 32 then sends the first authentication constituting process result information b1 and an authentication constituting process P2 execution request to the second unit device 50 which comes next in the processing order in accordance with the execution result in the device information storage unit 33, as shown in FIG. 18 (ST17).

When the second unit device 50 receives the challenge value, the first authentication constituting process result information b1, and the authentication constituting process P2 execution request (ST18), the control unit 52 sends, to the authentication constituting process P2 executing unit 53, the execution result of the authentication constituting process P1 extracted from the first authentication constituting process result information b1, and an execution request, in accordance with the authentication processing that is predetermined or that is specified by the authentication request from the service providing device 20.

The authentication constituting process P2 executing unit 53 reads the user unique information 55a from the secret information managing unit 55 (ST19), and executes the authentication constituting process P2 in accordance with the user biometric referential information 55c out of the user unique information and the execution result of the authentication constituting process P1 (ST20), thereby obtaining an execution result. That is, as shown in FIG. 5 by way of example, the authentication constituting process P2 obtains, as an execution result, successful authentication (unsuccessful authentication) by the processing of sequentially executing a storage function for storing the biometric referential information for the user, a matching function for matching the user biometric information against the biometric referential information 55c, and a judging function for judging by the matching result whether the authentication is successful. The authentication constituting process P2 executing unit 53 may compare the hash value calculated from the user biometric referential information 55c with the hash value of the biometric referential information in the user identification information certificate 55b, and further perform processing to judge that the authentication is unsuccessful regardless of the result of the authentication constituting process P2 when the hash values do not correspond to each other.

The control unit 52 then sends, to the authentication context generating unit 57, the execution result of the authentication constituting process P2, the user identification information certificate 55b out of the user unique information, and the challenge value.

The authentication context generating unit 57 describes the header block c2h and the data block c2d of the second authentication context c2 to generate context information comprising the blocks c2h and c2d (ST21), and sends the context information to the authenticator generating unit 56.

When receiving the context information, the authenticator generating unit 56 reads the secret information 2 for authenticator generation from the secret information managing unit 55 (ST22). The authenticator generating unit 56 then uses the secret information 2 to generate an authenticator in accordance with the context information, and sends the authenticator to the authentication context generating unit 57.

The authentication context generating unit 57 describes this authenticator in the authenticator block c2a, and generates a second authentication context c2 comprising three blocks c2h, c2d, and c2a (ST23).

When receiving the second authentication context c2 from the authentication context generating unit 57, the control unit 52 sends the second authentication context c2 and the execution result of the authentication constituting process P2 to the result information generating unit 58.

The result information generating unit 58 describes the second authentication context c2 and the execution result of the authentication constituting process P2 in a specific format to generate second authentication constituting process result information b2 (ST24), and sends the second authentication constituting process result information b2 to the control unit 52.

The control unit 52 uses the communication unit 51 to send the second authentication constituting process result information b2 to the unit integrating device 30 (ST25).

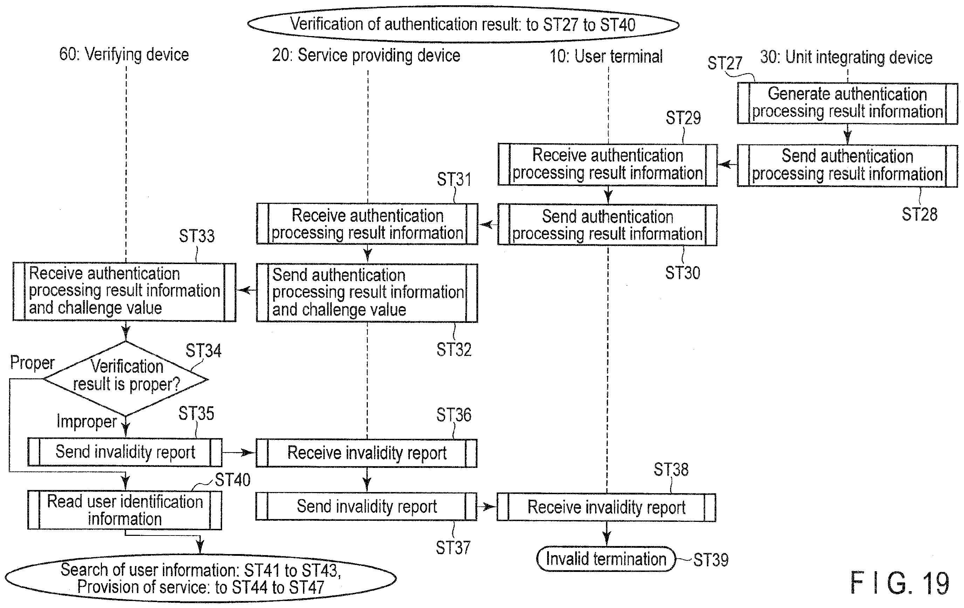

The unit integrating device 30 receives the second authentication constituting process result information b2 (ST26). As shown in FIG. 19, the control unit 32 ascertains that the processing of all the authentication constituting processes has been finished, and then sends the first authentication constituting process result information b1 and the second authentication constituting process result information b2 to the result information integrating unit 34. The result information integrating unit 34 generates authentication processing result information b (ST27). In the authentication processing result information b, the authentication contexts c1 and c2 in the authentication constituting process result information b1 and b2, and the execution result in the authentication constituting process result information b2 received from the last second unit device 50 in the processing order are described in a specific format.

The unit integrating device 30 sends the generated authentication processing result information b to the user terminal 10 (ST28).

When receiving the authentication processing result information b (ST29), the user terminal 10 sends the authentication processing result information b to the service providing device 20 as the result for the authentication request (ST30).

When receiving the authentication processing result information b (ST31), the service providing device 20 sends, to the verifying device 60, the challenge value previously held in step ST3, the authentication processing result information b, and the service providing policy 23b in the storage unit 23 (ST32).

When the verifying device 60 receives the challenge value, the authentication processing result information b, and the service providing policy 23b (ST33), the verifying unit 62 starts verification.

The verifying unit 62 verifies that the received authentication processing result information b fits the specific format. For example, the verifying unit 62 verifies that there is no missing information in the authentication processing result information b.

The verifying unit 62 verifies the authenticators in the authentication contexts c1 and c2 described in the received authentication processing result information b. The authenticators are verified by the corresponding public keys, for example, when the authenticators are digital signatures. The authenticators are verified by the common key previously shared by the unit devices 40 and 50 when the authenticators are message authentication codes.

The verifying unit 62 verifies the digital signatures in the equipment certificates 44a and 54a included in the authentication contexts c1 and c2 described in the received authentication processing result information b in accordance with the public key to the equipment certificate issuer in the storage unit 63.

The verifying unit 62 verifies the digital signature in the user identification information certificate 55b included in the authentication context c2 described in the received authentication processing result information b in accordance with the public key to the third-party organization in the storage unit 63.

The verifying unit 62 verifies the evaluation reports 44b and 54b included in the authentication contexts c1 and c2 described in the received authentication processing result information b in accordance with the received service providing policy 23b. Levels are assigned to the service providing classifications of the service providing policy 23b. The verification result by the verifying unit 62 is a service providing classification at the highest level that conforms to the service providing policy 23b. Here, the "level" means the level of a service. For example, conditions based on various perspectives correspond to the "level": a money-based condition that permits use up to ten thousand yen or fifty thousand yen, or a time-based condition. This also applies to the explanations in the following embodiments.

The verifying unit 62 verifies the challenge values in the authentication contexts c1 and c2 described in the received authentication processing result information b in accordance with the received challenge value.

The verifying unit 62 verifies that the execution result described in the received authentication processing result information b is proper.

Subsequently, the verifying unit 62 judges whether all the verification results described above are proper (ST34). When even one of the verification results is not proper (ST34; improper), the verifying unit 62 judges this fact to be invalid, and reports the invalidity to the service providing device 20 (ST35). The service providing device 20 receives the invalidity report (ST36), and reports the invalidity to the user terminal 10 (ST37). The user terminal 10 receives the invalidity report (ST38), and finishes the processing (ST39).

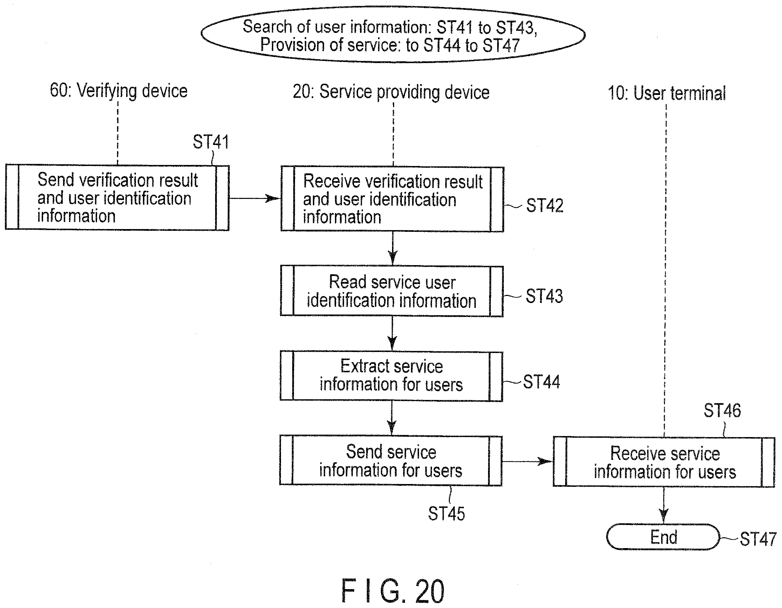

On the other hand, when all the verification results are proper (ST34; proper), the verifying device 60 reads the user identification information from the user identification information certificate 55b used for the verification (ST40). As shown in FIG. 20, the verifying device 60 then sends, to the service providing device 20, the user identification information, the verification result that indicates properness, and the service providing classification which is the verification result of the service providing policy 23b (ST41).

The service providing device 20 receives the user identification information and the verification result (ST42). When the verification result is proper, the service providing unit 22 then searches the storage unit 23 in accordance with the user identification information, and reads service user identification information (e.g., a credit card number) associated with the user identification information (ST43).

The service providing unit 22 extracts service information for users from the unshown storage unit in accordance with the read service user identification information (ST44), and sends the service information for users to the user terminal 10 (ST45). The service information provided for users is service information at a lower level selected from the level of the service providing classification of the user information 23a and the level of the service providing classification which is the verification result by the verifying device 60. The user identification information in the user identification information certificate 55b is provided by the TTP, and is different from the service user identification information provided by the operator of the service providing device 20.

The user terminal 10 receives the service information for users (ST46), and finishes the processing (ST47).

As described above, according to the present embodiment, verification is performed by the use of the authentication contexts c1 and c2, the equipment certificates 44a and 54a, the evaluation reports 44b and 54b, the user identification information certificate 55b, the service providing policy 23b, and the challenge value. This configuration eliminates the necessity of carrying and presenting a card such as a credit card or a bank card having service user identification information therein, and enables the identification of a user.

In the present embodiment, it is possible to verify that the authentication constituting process is reliable from the aspects [1] to [7] shown below.
[1] By the configuration that verifies the format of the authentication processing result information b, it is possible to check that there are no inadequacies in the authentication processing result information b serving for verification.
[2] By the configuration that verifies the authenticator, it is possible to check that the execution contents and execution results of the unit devices 40 and 50 are not altered.
[3] By the configuration that verifies the evaluation reports 44b and 54b, it is possible to check that the unit devices 40 and 50 are proper devices.
[4] By the configuration that verifies the user identification information certificate 55b, it is possible to check that user identification information is proper user identification information for the user which has undergone biometric authentication.
[5] By the configuration that verifies the evaluation reports 44b and 54b, it is possible to check that the unit devices 40 and 50 satisfy the service providing policy.
[6] By the configuration that verifies the challenge value, it is possible to check that there is no replay attack of the authentication processing result information b. It is assumed that the replay attack here is an attack in which a malicious third party holds the authentication processing result information b for the user collected from a network and then resends the authentication processing result information b to pretend to be this user. The challenge value is a random value generated for every authentication processing, so that even in the case of such a replay attack, the replay attack can be detected if the challenge value does not correspond.
[7] By the execution result verifying function, it is possible to check that the execution result of the biometric authentication is proper.

In the present embodiment, the user identification information in the user identification information certificate 55b is different from service user identification information such as a credit card number. Therefore, the service user identification information is not transmitted on the network, so that the possibility of the leakage of the service user identification information can be reduced. In addition, the user can use a service even if the user does not know the service user identification information. Thus, when the credit card is discontinued, inadvertent leakage of the service user identification information attributed to the user can be prevented.

The service providing system described in the present embodiment can be applied to various models of biometric authentications.

For example, in the case of an on-card matching (OCM) model of the biometric authentication, the first unit device 40 performs the collection and signal processing of biometric data. The second unit device 50 holds a template which is previously registered biometric referential information, checks the signal processing result from the first unit device 40 against the template, and outputs a judgment result based on the matching result.

In the case of a store on card (STOC) model of the biometric authentication, the first unit device 40 performs the collection and signal processing of biometric data. The unit device 50 holds a template which is previously registered biometric referential information, and supplies the template to the first unit device 40 or a third unit device. The third unit device is not describedin the present embodiment, and is described here for the first time. The first unit device 40 or the third unit device checks the signal processing result from the first unit device 40 against the template, and outputs a judgment result based on the matching result. The third unit device is substantially similar in configuration and operation to the first unit device 40.

### (Second Embodiment)

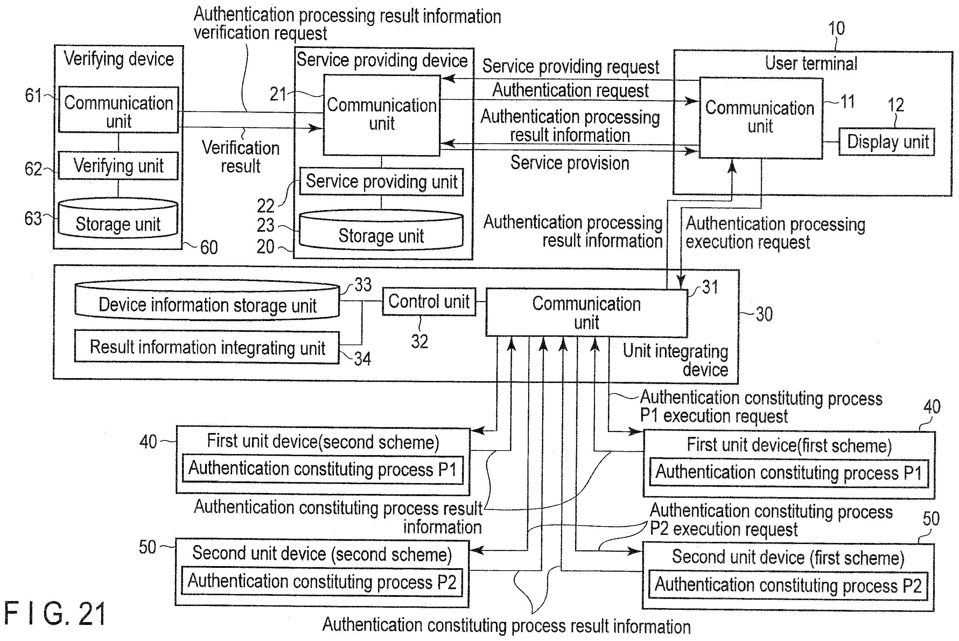

FIG. 21 is a schematic diagram showing the configuration of a service providing system according to a second embodiment. Parts similar to those in FIG. 1 are indicated by the same reference signs and not described in detail. Here, differences are mainly described. Repeated explanations are not given in the following embodiments either.

The present embodiment is a modification of the present embodiment, and uses multimodal biometric authentication. The multimodal biometric authentication is biometric authentication that makes a judgment by mixing two or more matching results based on biometric information and thus permits more accurate biometric authentication.

The configuration of the unit device varies depending on which of the OCM and STOC models described in the end of the first embodiment is used for each piece of the biometric information. Meanwhile, the unit device that includes an actually used template functions in the same manner as the second unit device 50 according to the first embodiment. The unit device that includes no template and that performs the authentication constituting process operates in the same manner as the first unit device 40 according to the first embodiment.

Here, the OCM model is used. As shown, first and second unit devices 40 and 50 of a first scheme, and first and second unit devices 40 and 50 of a second scheme are provided. The first and second unit devices 40 and 50 of the first scheme and the first and second unit devices 40 and 50 of the second scheme are only different from each other in biometric authentication method (e.g., a fingerprint authentication method and a face authentication method), and have the same function blocks.

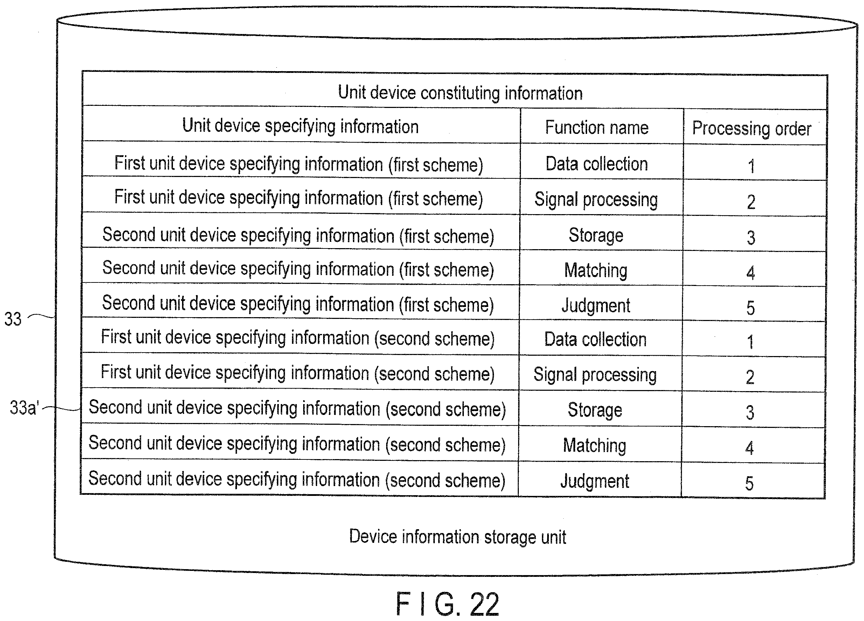

As shown in FIG. 22, in a unit integrating device 30, a unit device constituting information 33a' in a device information storage unit 33 is described in conformity to the first and second unit devices 40 and 50 of each scheme.

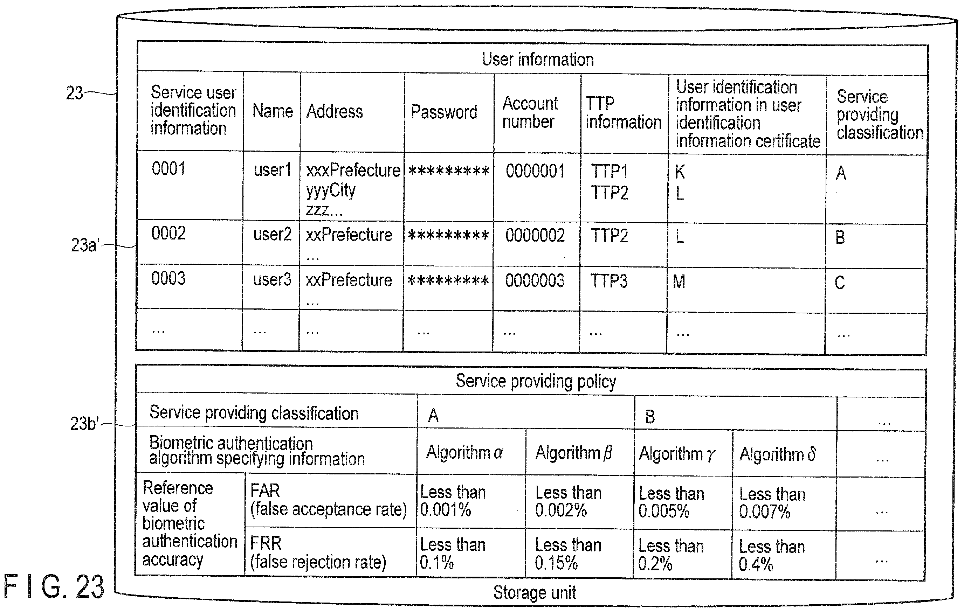

As shown in FIG. 23, in a service providing device 20, user identification information in a user identification information certificate and TTP information in user information 23a' within a storage unit 23 are described for the first scheme and the second scheme.

Regarding a service providing policy 23b' within the storage unit 23, biometric authentication constituting process information and a reference value of biometric authentication accuracy are described for the first scheme and the second scheme in one service A.

For example, biometric authentication constituting process information α and γ are provided for the first scheme, and biometric authentication constituting process information β and δ are provided for the second scheme. In this case, regarding the service A and a service B, it is possible to select and use the biometric authentication constituting process information α and γ for the first scheme, and the biometric authentication constituting process information β and δ for the second scheme. This is not limited to the service A and the service B, and is applied to target services.

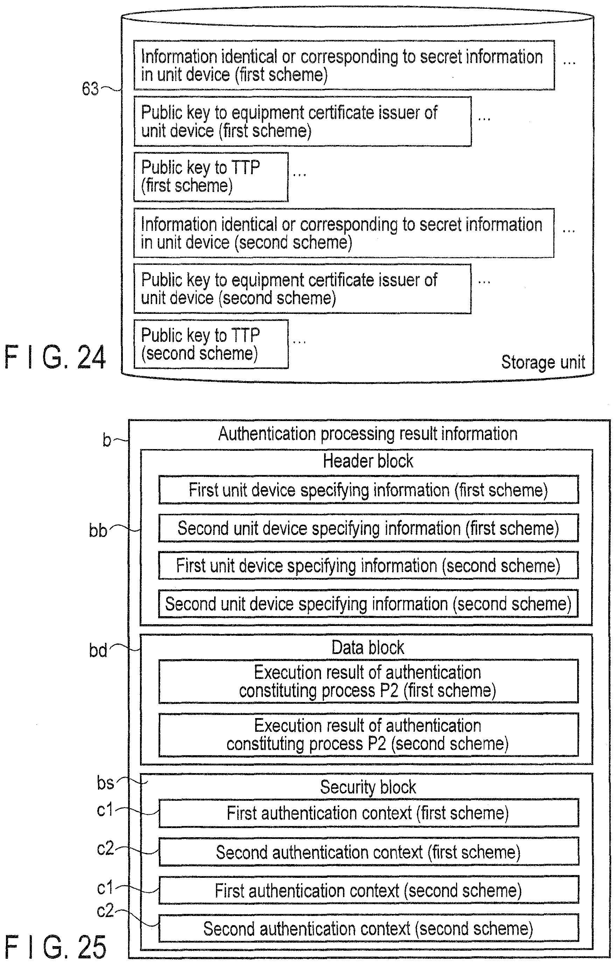

As shown in FIG. 24, in a verifying device 60, information and public keys identical or corresponding to secret information for the unit devices 40 and 50 of the storage unit 63 are described for the first scheme and the second scheme.

As shown in FIG. 25, in authentication processing result information b output by the unit integrating device 30, first and second unit device specifying information, the execution result of the authentication constituting process P2, and first and second authentication contexts c1 and c2 are described in conformity to the first scheme and the second scheme.

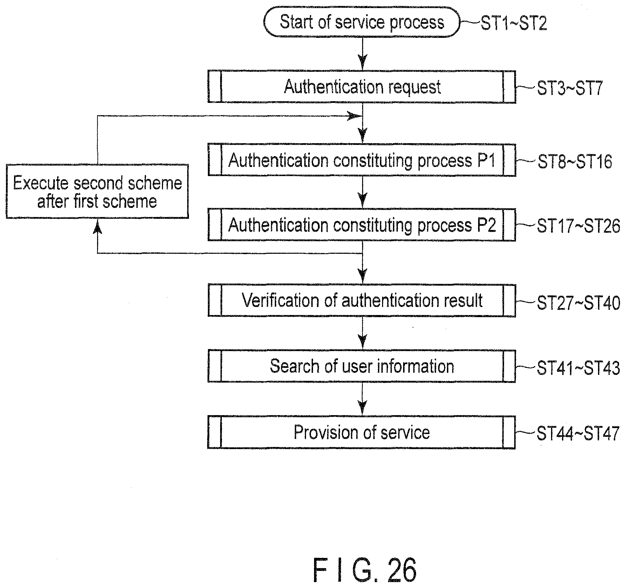

Now, the operation of the service providing system having the above configuration is described with reference to the flowchart in FIG. 26.

Processes in steps ST1 to ST7 are performed in the manner described above.

Processes in steps ST8 to ST26 are performed so that the second scheme is performed after the first scheme.

Processes in steps ST27 to ST39 are performed in the manner described above.

In a process in step ST40, the verifying device 60 reads all the different user identification information.

Processes in steps ST41 to ST42 are performed in the manner described above.

In a process in step ST43, the service providing device 20 searches pieces of user identification information.

Processes in steps ST44 to ST47 are performed in the manner described above.

As described above, according to the present embodiment, the first and second unit devices 40 and 50 of the first scheme and the first and second unit devices 40 and 50 of the second scheme are provided. This configuration allows the application of the first embodiment to the multimodal biometric authentication.

### (Third Embodiment)

Now, a service providing system according to a third embodiment is described.

The present embodiment is a modification of the present embodiment. In order to reduce the effect of the modification of a user identification information certificate 55b on a service providing device 20, the service providing device 20 does not hold the user identification information in the user identification information certificate 55b.

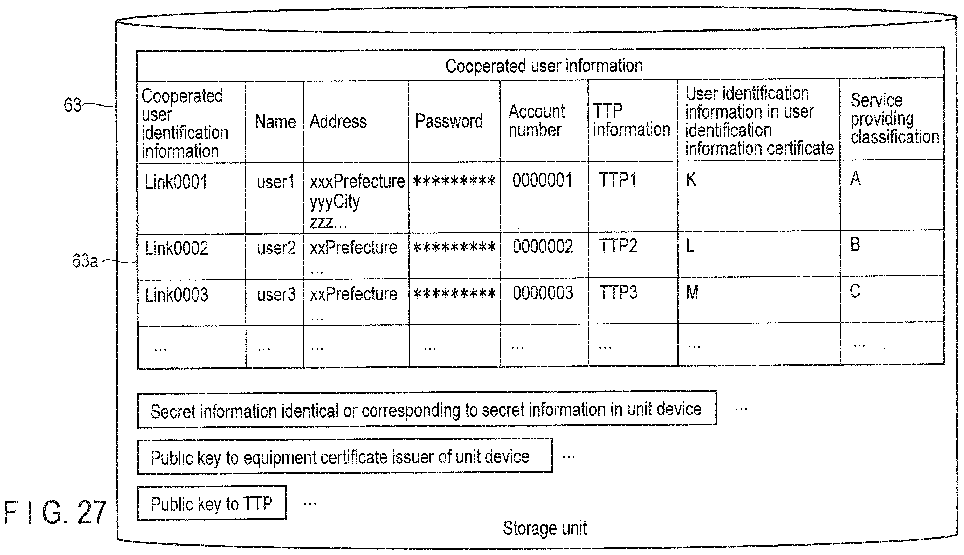

More specifically, as shown in FIG. 27, cooperated user information 63a is stored in a storage unit 63 of a verifying device 60 in addition to the aforementioned information and public keys identical or corresponding to secret information for unit devices 40 and 50. In the cooperated user information 63a, the user identification information in the user identification information certificate 55b, and cooperated user identification information which has a value different from that of the user identification information to identify the user are described in association with each other. A user name, an address, a password, an account number, TTP information, and a service ID may be further described in the cooperated user information 63a in association with one another.

The verifying unit 62 has a next cooperated user identification information sending function (f62-9)' instead of the aforementioned user identification information sending function (f62-9):
(f62-9)' A cooperated user identification information sending function to send, to the service providing device 20, the cooperated user identification information read from the cooperated user information 63a in accordance with the user identification information in the user identification information certificate 55b used for the verification by the user identification information certificate verifying function and the verification result that indicates properness when all the verification results by the format verifying function, the authenticator verifying function, the equipment certificate verifying function, the user identification information certificate verifying function, the evaluation report verifying function, the challenge value verifying function, and the execution result verifying function are proper.

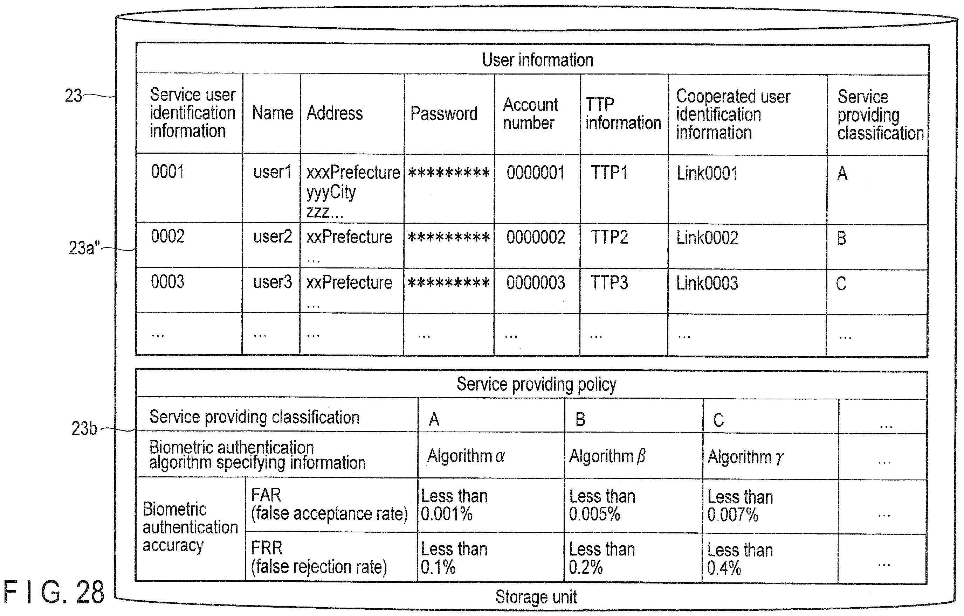

On the other hand, as shown in FIG. 28, user information 23a" in which cooperated user identification information is described is stored in the storage unit 23 of the service providing device 20 instead of the aforementioned "user identification information in the user identification information certificate 55b" in the user information 23a. The cooperated user identification information in the user information 23a" is the same as the cooperated user identification information in the storage unit 63 of the verifying device 60. The service user identification information in the user information 23a" has a value different from those of the cooperated user identification information and the "user identification information in the user identification information certificate 55b" to identify the user, and is associated with the cooperated user identification information.

The service providing unit 22 has a next cooperated read function (f22-3)' instead of the aforementioned read function (f22-3):
(f22-3)' A cooperated read function to search the storage unit 23 in accordance with the cooperated user identification information and read service user identification information associated with the cooperated user identification information in response to the cooperated user identification information and the verification result from the verifying device 60 when the verification result is proper.

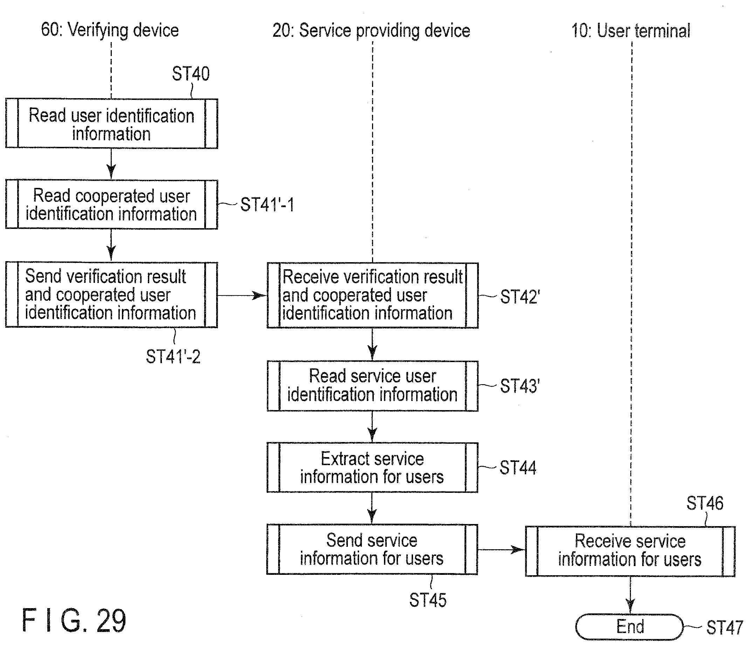

Now, the operation of the service providing system having the above configuration is described with reference to flowchart in FIG. 29.

Processes in steps ST1 to ST40 are performed in the manner described above.

The verifying unit 62 of the verifying device 60 reads the cooperated user identification information from the storage unit 63 in accordance with the user identification information read in step ST40 (ST41'-1), and sends, to the service providing device 20, the read cooperated user identification information and the verification result that indicates properness (step ST41'-2).

In response to cooperated user identification information and the verification result (step ST42'), the service providing device 20 searches the storage unit 23 in accordance with the cooperated user identification information when the verification result is proper, reads service user identification information (e.g., a credit card number) associated with the cooperated user identification information (step ST43'), extracts service information for users from the service providing unit 22 (step ST44), and sends the service information for users to the user terminal 10 (step ST45). The cooperated user identification information is provided by the operator of the verifying device 60, and is different from the service user identification information provided by the operator of the service providing device 20.

The user terminal 10 receives the service information for users (ST46), and finishes the processing (ST47).

As described above, according to the present embodiment, the service providing device 20 does not hold the user identification information in the user identification information certificate 55b. This configuration can reduce the effect of the modification of the user identification information on the service providing device 20, in addition to the advantageous effects similar to those according to the first embodiment.

The present embodiment is a modification of the verifying device 60 and the service providing device 20, and can therefore be applied not only as the modification of the first embodiment but also as the modification of the second embodiment.

According to at least one of the embodiments described above, the authentication contexts c1 and c2 have the equipment certificates 44a and 54a, the evaluation reports 44b and 54b, the challenge value from the service providing device 20, and the hash value and the authenticator of the execution result of the authentication constituting process. The second authentication context c2 further has the user identification information certificate. The authentication processing result information b has the execution result of the authentication constituting process P2 and the authentication contexts c1 and c2. According to this configuration, the verifying device 60 can perform verification by the verification functions. This eliminates the necessity of carrying and presenting a card having service user identification information therein, and enables the identification of a user.

As none of the devices 10 to 60 send and receive the service user identification information, the possibility of the leakage of the service user identification information can be reduced.

The method described in the embodiment can also be stored in a storage medium such as a magnetic disk (floppyTM disk, hard disk, or the like), an optical disk (CD-ROM, DVD, or the like), a magneto-optical disk (MO), or a semiconductor memory as a program which can be executed by a computer and distributed.

As the storage medium, any configuration which is a computer-readable storage medium in which a program can be stored may be used regardless of a storage format.

An OS (operating system) which operates on a computer on the basis of an instruction of a program installed from the storage medium in the computer, database management software, and MW (middleware) such as network software may execute a part of the processes to realize the embodiment.

Furthermore, the storage medium according to the present invention includes not only a medium independent of a computer but also a storage medium in which a program transmitted through a LAN, the Internet, or the like is downloaded and stored or temporarily stored.

The number of storage media is not limited to one. A case in which the process in the embodiment is executed from a plurality of media is included in the storage medium according to the present invention. Any medium configuration may be used.

A computer according to the present invention is to execute the processes in the embodiments on the basis of the program stored in a storage medium. The computer may have any configuration such as one apparatus constituted by a personal computer or a system in which a plurality of apparatuses are connected by a network.

A computer in each embodiment includes not only a personal computer but also an arithmetic processing apparatus, a microcomputer, or the like included in an information processing apparatus. The computer is a generic name of an apparatus and a device which can realize the functions of the present invention by a program.

While certain embodiments have been described, these embodiments have been presented by way of example only, and are not intended to limit the scope of the inventions. Indeed, the novel embodiments described herein may be embodied in a variety of other forms.

## Claims

1. A service providing system comprising: a plurality of unit devices (40, 50) which independently execute authentication constituting processes constituting authentication processing that uses biometric authentication; a unit integrating device which has each of the unit devices provided therein or externally connected thereto to communicate with each of the unit devices; a user terminal which has the unit integrating device provided therein or externally connected thereto to communicate with the unit integrating device; a verifying device which verifies the execution contents of each of the authentication constituting processes in accordance with an authenticator; and a service providing device which communicates with the user terminal and the verifying device,
each of the unit devices comprising
first storage means (44, 54) for storing an equipment certificate issued to each of the unit devices by an equipment certificate issuer in accordance with a public key encryption method, the equipment certificate including an equipment certificate body and a digital signature generated for the equipment certificate body by a secret key to the equipment certificate issuer, the equipment certificate body including identification information for a public key of or for secret information to generate a message authentication code of the unit device to which the authentication constituting process belongs, unit device specifying information to specify the unit device to which the authentication constituting process belongs, and equipment certificate issuer information to specify the equipment certificate issuer,
second storage means (44, 54) for storing an evaluation report, the evaluation report including the unit device specifying information of the unit device used for the execution of the authentication constituting process, biometric authentication constituting process information to specify a biometric authentication constituting process including a biometric authentication algorithm, and biometric authentication accuracy by the biometric authentication algorithm,
third storage means (45, 55) for storing secret information to generate the authenticator,
means (42, 52) for executing the authentication constituting process when each of the unit devices receives, from the unit integrating device, a random challenge value generated by the service providing device, and an authentication constituting process execution request,
authenticator generating means (46, 56) for generating the authenticator by the use of the secret information in accordance with the equipment certificate, the evaluation report, the challenge value, and a hash value of the execution contents,
authentication context generating means (47, 57) for generating an authentication context, the equipment certificate, the evaluation report, the challenge value, the hash value of the execution contents, and the authenticator being described in the authentication context in a specific format, and
means (46, 56) for generating authentication constituting process result information in which the authentication context and the execution result of the authentication constituting process are described in a specific format,
at least one of the unit devices further comprising
fourth storage means (55) for storing a user identification information certificate issued to a user of the user terminal by a third-party organization in accordance with a public key encryption method, the user identification information certificate including a certificate body and a digital signature generated for the certificate body by a secret key to the third-party organization, the certificate body including user identification information, a hash value of biometric referential information for the user, and the third-party organization information,
the authenticator generating means (46, 56) of at least one of the unit devices generating the authenticator by the use of the secret information in accordance with the equipment certificate, the evaluation report, the challenge value, the user identification information certificate, and the hash value of the execution contents, the authentication context generating means of at least one of the unit devices generating an authentication context, the equipment certificate, the evaluation report, the challenge value, the user identification information certificate, the hash value of the execution contents, and the authenticator being described in the authentication context in a specific format,
the unit integrating device comprising
fifth storage means (33) for storing, in association with one another, unit device specifying information, a function name indicating a function in an authentication constituting process, and a processing order of the functions,
means (32) for sending the challenge value and an authentication constituting process execution request to the unit device specified by the unit device specifying information in accordance with the processing order and the unit device specifying information in response to the authentication processing execution request and the challenge value from the user terminal,
means (32) for sending the challenge value and the authentication constituting process execution request to the unit device subsequent to the sending destination unit device in the processing order in accordance with the processing order and the unit device specifying information in the fifth storage means in response to the authentication constituting process result information from the unit device which is a sending destination of the authentication constituting process execution request, and
means (32) for generating authentication processing result information in accordance with the processing order and the unit device specifying information in the fifth storage means in response to the authentication constituting process result information from the unit device which is a sending destination of the authentication constituting process execution request when the sending destination unit device is the last unit device in the processing order, the authentication context in the authentication constituting process result information received from each of the unit devices and the execution result in the authentication constituting process result information received from the last unit device in the processing order being described in the authentication processing result information in a specific format,
the user terminal comprising
means (11) for sending, to the unit integrating device, the challenge value and the authentication processing execution request in response to an authentication request which requests the user to perform the biometric authentication, and the challenge value from the service providing device, and
means (11) for transferring, to the service providing device, authentication processing result information received from the unit integrating device,
the service providing device comprising
sixth storage means (23) for storing, in association with each other, user identification information in the user identification information certificate, and service user identification information which has a value different from that of the user identification information to identify the user,
seventh storage means (23) for storing a service providing policy indicating conditions for providing services to the user, the service providing policy including service identification information, unit device specifying information used for the execution of the authentication constituting processes, biometric authentication constituting process information to specify a biometric authentication constituting process including a biometric authentication algorithm, and a reference value regarding the biometric authentication accuracy as proper,
means (32) for generating and holding the challenge value and sending the challenge value and the authentication request to the user terminal in response to a service request from the user terminal,
means (32) for sending the held challenge value, the authentication processing result information, and the service providing policy to the verifying device in response to authentication processing result information from the user terminal,
means (32) for searching the sixth storage means in accordance with the user identification information and reading service user identification information associated with the user identification information in response to user identification information and a verification result from the verifying device when the verification result is proper, and
means (32) for sending the service information to the user terminal in accordance with the read service user identification information,
the verifying device (60) comprising
eighth storage means (63) for storing a public key to the equipment certificate issuer of each of the unit devices and a public key to the third-party organization,
means (61) for receiving, from the service providing device, the challenge value, the authentication processing result information, and the service providing policy,
first verifying means (62) for verifying that the received authentication processing result information fits the specific format,
second verifying means (62) for verifying an authenticator in the authentication context described in the received authentication processing result information,
third verifying means (62) for verifying the digital signature in the equipment certificate included in the authentication context described in the received authentication processing result information in accordance with the public key to the equipment certificate issuer,
fourth verifying means (62) for verifying the digital signature in the user identification information certificate included in the authentication context described in the received authentication processing result information in accordance with the public key to the third-party organization,
fifth verifying means (62) for verifying the evaluation report included in the authentication context described in the received authentication processing result information in accordance with the received service providing policy,
sixth verifying means (62) for verifying the challenge value in the authentication context described in the received authentication processing result information in accordance with the received challenge value,
seventh verifying means (62) for verifying that the execution result described in the received authentication processing result information is proper, and
means for sending (61), to the service providing device, the user identification information in the user identification information certificate used for the verification fourth verifying means and the verification result that indicates properness when all the verification results by seven verifying means from the first verifying means, to the seventh verifying means are proper.

2. The service providing system according to claim 1,
the service providing device further comprising
ninth storage means (23) for storing, in association with each other, cooperated user identification information which has a value different from that of the user identification information, and service user identification information which has a value different from those of the cooperated user identification information and the user identification information,
means (23) for searching the ninth storage means in accordance with the cooperated user identification information and reading service user identification information associated with the cooperated user identification information in response to the cooperated user identification information and the verification result from the verifying device when the verification result is proper, and
the verifying device further comprising
tenth storage means (63) for storing, in association with each other, the user identification information in the user identification information certificate, and cooperated user identification information which is the same as the former cooperated user identification information having a value different from that of the user identification information, and
means (61) for sending, to the service providing device, the cooperated user identification information read from the tenth storage means and the verification result that indicates properness in accordance with the user identification information in the user identification information certificate used for the verification by the fourth verifying means when all the verification results by seven verify means from the first verifying means, to the seventh verifying means are proper.

3. The service providing system according to claim 1 or claim 2, wherein
the second verifying means (62) verifies the authenticator generated by each of the unit devices in accordance with information identical or corresponding to the secret information in each of the unit devices.

4. The service providing system according to claim 1 or claim 2, wherein
the secret information is a secret key in a public key encryption method, and
the authenticator is a digital signature generated on the basis of the secret key.

5. At least one of a plurality of unit devices used in a service providing system according to claim 1, comprising:
third storage means (44, 54) for storing secret information to generate the authenticator;
means (42, 52) for executing the authentication constituting process when receiving, from the unit integrating device, a random challenge value generated by the service providing device, and an authentication constituting process execution request to request the execution of the authentication constituting process; and
means (42, 52) for generating authentication constituting process result information in which the authentication context and the execution result of the authentication constituting process are described in a specific format;
wherein the authentication context and the execution result are extracted as the authentication constituting process result information by the unit integrating device,
the extracted authentication context and execution result are described in authentication processing result information in a specific format by the unit integrating device, and
the authentication processing result information is sent to the service providing device from the unit integrating device via the user terminal, the authentication context, and
the execution result are extracted by the verifying device after the authentication processing result information to which the challenge value and a service providing policy are added by the service providing device is sent, and the verifying device verifies the execution result, the format of the authentication processing result information, the authenticator in the authentication context, the equipment certificate, the evaluation report, the user identification information certificate, and the challenge value.

## Patentansprüche

1. Dienstbereitstellungssystem, umfassend: eine Vielzahl von Einheitsvorrichtungen (40, 50), die unabhängig voneinander Authentifizierungserzeugungsprozesse ausführen, die Authentifizierungsverarbeitung erzeugen, die biometrische Authentifizierung verwendet; eine Einheitsintegrationsvorrichtung, die jede der darin vorgesehenen oder extern damit verbundenen Einheitsvorrichtungen zur Kommunikation mit jeder der Einheitsvorrichtungen aufweist; ein Benutzerendgerät, das die darin vorgesehene oder extern damit verbundene Einheitsintegrationsvorrichtung aufweist, um mit der Einheitsintegrationsvorrichtung zu kommunizieren; eine Überprüfungsvorrichtung, die den Ausführungsinhalt jedes der Authentifizierungserzeugungsprozesse gemäß einem Authentifikator überprüft; und eine Dienstbereitstellungsvorrichtung, die mit dem Benutzerendgerät und der Überprüfungsvorrichtung kommuniziert,
wobei jede der Einheitsvorrichtungen Folgendes umfasst
erste Speichermittel (44, 54) zum Speichern eines Gerätezertifikats, das für jede der Einheitsvorrichtungen von einem Gerätezertifikatsaussteller gemäß einem Verschlüsselungsverfahren mit öffentlichem Schlüssel ausgestellt wird, wobei das Gerätezertifikat eine Gerätezertifikats-Textkörper und eine digitale Signatur beinhaltet, die für die Gerätezertifikats-Textkörper durch einen geheimen Schlüssel für den Gerätezertifikatsaussteller generiert wird, wobei die Gerätezertifikats-Textkörper Identifikationsinformationen für einen öffentlichen Schlüssel oder für geheime Informationen zum Generieren eines Nachrichten-Authentifizierungscodes der Gerätevorrichtung beinhaltet, zu welcher der Authentifizierungserzeugungsprozess gehört, Informationen zur Festlegung der Einheitsvorrichtung zum Festlegen bei der Einheitsvorrichtung, zu welcher der Authentifizierungserzeugungsprozess gehört, und Gerätezertifikatausstellerinformationen zum Festlegen des Gerätezertifikatsausstellers beinhaltet,
zweite Speichermittel (44, 54) zum Speichern eines Evaluierungsberichts, wobei der Evaluierungsbericht die Informationen zur Festlegung der Einheitsvorrichtung der Einheitsvorrichtung, die für die Ausführung des Authentifizierungserzeugungsprozesses verwendet werden, biometrische Authentifizierungserzeugungsprozessinformationen, um einen biometrischen Authentifizierungserzeugungsprozess festzulegen, der einen biometrischen Authentifizierungsalgorithmus beinhaltet, und biometrische Authentifizierungsgenauigkeit durch den biometrischen Authentifizierungsalgorithmus beinhaltet,
dritte Speichermittel (45, 55) zum Speichern von geheimen Informationen, um den Authentifikator zu generieren,
Mittel (42, 52) zur Ausführung des Authentifizierungserzeugungsprozesses, wenn jede der Einheitsvorrichtungen von der Einheitsintegrationsvorrichtung einen zufälligen Challenge-Wert, der von der Dienstbereitstellungsvorrichtung generiert wird, und eine Authentifizierungserzeugungsprozess-Ausführungsanforderung empfängt,
Authentifikator-Erzeugungsmittel (46, 56) zum Generieren des Authentifikators durch die Verwendung der geheimen Informationen gemäß dem Gerätezertifikat, dem Evaluierungsbericht, dem Challenge-Wert und einem Hash-Wert der Ausführungsinhalte,
Authentifizierungskontext-Generierungsmittel (47, 57) zum Generieren eines Authentifizierungskontextes, wobei das Gerätezertifikat, der Evaluierungsbericht, der Challenge-Wert, der Hash-Wert der Ausführungsinhalte und der Authentifikator im Authentifizierungskontext in einem bestimmten Format beschrieben sind, und
Mittel (46, 56) zum Generieren von Authentifizierungserzeugungsprozess-Ergebnisinformationen, in denen der Authentifizierungskontext und das Ausführungsergebnis des Authentifizierungserzeugungsprozesses in einem bestimmten Format beschrieben sind,
wobei mindestens eine der Einheitsvorrichtungen weiter Folgendes umfasst vierte Speichermittel (55) zum Speichern eines Benutzeridentifikationsinformationszertifikats, das einem Benutzer des Benutzerendgeräts von einer Drittorganisation gemäß einem Verfahren zur Verschlüsselung mit öffentlichem Schlüssel ausgestellt wird, wobei das Benutzeridentifikationsinformationszertifikat eine Zertifikats-Textkörper und eine digitale Signatur beinhaltet, die für die Zertifikats-Textkörper durch einen geheimen Schlüssel für die Drittorganisation generiert wird, wobei die Zertifikats-Textkörper Benutzeridentifikationsinformationen, einen Hash-Wert biometrischer Referenzinformationen für den Benutzer und die Informationen der Drittorganisation beinhaltet,
die Authentifikator-Erzeugungsmittel (46, 56) von mindestens einer der Einheitsvorrichtungen, die den Authentifikator unter Verwendung der geheimen Informationen gemäß dem Gerätezertifikat, dem Evaluierungsbericht, dem Challenge-Wert, dem Benutzeridentifikationsinformationszertifikat und dem Hash-Wert der Ausführungsinhalte generieren, die Authentifizierungskontext-Generierungsmittel von mindestens einer der Einheitsvorrichtungen, die einen Authentifizierungskontext, das Gerätezertifikat, den Evaluierungsbericht, den Challenge-Wert, das Benutzeridentifikationsinformationszertifikat, den Hash-Wert der Ausführungsinhalte und den Authentifikator, der im Authentifizierungskontext in einem bestimmten Format beschrieben ist, generieren,
wobei die Einheitsintegrationsvorrichtung Folgendes umfasst
fünfte Speichermittel (33) zum Speichern, in Verbindung miteinander, von Informationen zur Festlegung der Einheitsvorrichtung, eines Funktionsnamens, der eine Funktion in einem Authentifizierungserzeugungsprozess angibt, und einer Verarbeitungsreihenfolge der Funktionen,
Mittel (32) zum Senden des Challenge-Wertes und einer Authentifizierungserzeugungsprozess-Ausführungsanforderung an die Einheitsvorrichtung, die durch die Informationen zur Festlegung der Einheitsvorrichtung gemäß der Verarbeitungsreihenfolge und die Informationen zur Festlegung der Einheitsvorrichtung als Reaktion auf die Authentifizierungsverarbeitungsausführungsanforderung, und den Challenge-Wert von dem Benutzerendgerät festgelegt wird,
Mittel (32) zum Senden des Challenge-Wertes und der Authentifizierungserzeugungsprozess-Ausführungsanforderung an die Einheitsvorrichtung nach der Sende-Zieleinheitsvorrichtung in der Verarbeitungsreihenfolge gemäß der Verarbeitungsreihenfolge und den Informationen zur Festlegung der Einheitsvorrichtung in den fünften Speichermitteln als Reaktion auf die Authentifizierungserzeugungsprozess-Ergebnisinformationen von der Einheitsvorrichtung, die ein Sendeziel der Authentifizierungserzeugungsprozess-Ausführungsanforderung ist, und
Mittel (32) zum Generieren von Authentifizierungserzeugungsprozess-Ergebnisinformationen gemäß der Verarbeitungsreihenfolge und den Informationen zur Festlegung der Einheitsvorrichtung in den fünften Speichermitteln als Reaktion auf Authentifizierungserzeugungsprozess-Ergebnisinformationen von der Einheitsvorrichtung, die ein Sendeziel der Authentifizierungserzeugungsprozess-Ausführungsanforderung ist, wenn die Sende-Zieleinheitsvorrichtung die letzte Einheitsvorrichtung in der Verarbeitungsreihenfolge ist, wobei der Authentifizierungskontext in den Authentifizierungserzeugungsprozess-Ergebnisinformationen, die von jeder der Einheitenvorrichtungen empfangen werden, und das Ausführungsergebnis in den Authentifizierungserzeugungsprozess-Ergebnisinformationen, die von der letzten Einheitsvorrichtung in der Verarbeitungsreihenfolge empfangen werden, in den Authentifizierungserzeugungsprozess-Ergebnisinformationen in einem bestimmten Format beschrieben werden,
wobei das Benutzerendgerät Folgendes umfasst
Mittel (11) zum Senden, an die Einheitsintegrationsvorrichtung, des Challenge-Wertes und der Authentifizierungsverarbeitungsausführungsanforderung als Reaktion auf eine Authentifizierungsanforderung, die den Benutzer auffordert, die biometrische Authentifizierung durchzuführen, und des Challenge-Wertes von der Dienstbereitstellungsvorrichtung, und
Mittel (11) zum Übertragen, an die Dienstbereitstellungsvorrichtung, von Authentifizierungsverarbeitungsergebnisinformationen, die von der Einheitsintegrationsvorrichtung empfangen werden,
wobei die Dienstbereitstellungsvorrichtung Folgendes umfasst
sechste Speichermittel (23) zum Speichern, in Verbindung miteinander, von Benutzeridentifikationsinformationen in dem Benutzeridentifikationsinformationszertifikat und von Dienstbenutzeridentifikationsinformationen, die einen anderen Wert als den Wert der Benutzeridentifikationsinformationen zur Identifizierung des Benutzers aufweisen,
siebte Speichermittel (23) zum Speichern einer Richtlinie zur Bereitstellung von Diensten, die Bedingungen für die Bereitstellung von Diensten für den Benutzer angibt, wobei die Richtlinie zur Bereitstellung von Diensten Informationen zur Identifizierung von Diensten, Informationen zur Festlegung der Einheitsvorrichtung, die für die Ausführung der Authentifizierungserzeugungsprozesse verwendet werden, biometrische Authentifizierungserzeugungsprozessinformationen zur Festlegung eines biometrischen Authentifizierungserzeugungsprozesses, der einen biometrischen Authentifizierungsalgorithmus beinhaltet, und einen Referenzwert, der die biometrische Authentifizierungsgenauigkeit als korrekt betrachtet, beinhaltet,
Mittel (32) zum Generieren und Halten des Challenge-Wertes und Senden des Challenge-Wertes und der Authentifizierungsanforderung an das Benutzerendgerät als Reaktion auf eine Dienstanforderung von dem Benutzerendgerät,
Mittel (32) zum Senden des gehaltenen Challenge-Wertes, der Authentifizierungsverarbeitungsergebnisinformationen und der Richtlinie zur Bereitstellung von Diensten für die Überprüfungsvorrichtung als Reaktion auf die Authentifizierungsverarbeitungsergebnisinformationen von dem Benutzerendgerät,
Mittel (32) zum Durchsuchen der sechsten Speichermittel gemäß den Benutzeridentifikationsinformationen und Lesen von DienstBenutzeridentifikationsinformationen, die den Benutzeridentifikationsinformationen als Reaktion auf Benutzeridentifikationsinformationen und ein Überprüfungsergebnis von der Überprüfungsvorrichtung zugeordnet sind, wenn das Überprüfungsergebnis korrekt ist, und
Mittel (32) zum Senden der Dienstinformationen an das Benutzerendgerät gemäß den Lesedienst-Benutzeridentifikationsinformationen,
wobei die Überprüfungsvorrichtung (60) Folgendes umfasst
achte Speichermittel (63) zum Speichern eines öffentlichen Schlüssels für den Gerätezertifikataussteller jeder der Einheitsvorrichtungen und eines öffentlichen Schlüssels für die Drittorganisation,
Mittel (61) zum Empfangen, von der Dienstbereitstellungsvorrichtung, des Challenge-Wertes, der Authentifizierungsverarbeitungsergebnisinformationen und der Richtlinie zur Bereitstellung von Diensten,
erste Überprüfungsmittel (62) zum Überprüfen, ob die empfangenen Authentifizierungsverarbeitungsergebnisinformationen dem bestimmten Format entsprechen,
zweite Überprüfungsmittel (62) zum Überprüfen eines Authentifikators in dem Authentifizierungskontext, der in den empfangenen Authentifizierungsverarbeitungsergebnisinformationen beschrieben ist,
dritte Überprüfungsmittel (62) zum Überprüfen der digitalen Signatur in dem Gerätezertifikat, das in dem Authentifizierungskontext beinhaltet ist, der in den empfangenen Authentifizierungsverarbeitungsergebnisinformationen gemäß dem öffentlichen Schlüssel für den Gerätezertifikatsaussteller beschrieben ist,
vierte Überprüfungsmittel (62) zum Überprüfen der digitalen Signatur in dem Benutzeridentifikationsinformationszertifikat, das in dem Authentifizierungskontext beinhaltet ist, der in den empfangenen Authentifizierungsverarbeitungsergebnisinformationen gemäß dem öffentlichen Schlüssel für die Drittorganisation beschrieben ist,
fünfte Überprüfungsmittel (62) zum Überprüfen des Evaluierungsberichts, der in dem Authentifizierungskontext beinhaltet ist, der in den empfangenen Authentifizierungsverarbeitungsergebnisinformationen gemäß den Richtlinien für die Bereitstellung empfangener Dienste beschrieben ist,
sechste Überprüfungsmittel (62) zum Überprüfen des Challenge-Wertes in dem Authentifizierungskontext, der in den empfangenen Authentifizierungsverarbeitungsergebnisinformationen gemäß dem empfangenen Challenge-Wert beschrieben ist,
siebte Überprüfungsmittel (62) zum Überprüfen, ob das in den empfangenen Authentifizierungsverarbeitungsergebnisinformationen beschriebene Ausführungsergebnis korrekt ist, und
Mittel zum Senden (61), an die Dienstbereitstellungsvorrichtung, der Benutzeridentifikationsinformationen in dem Benutzeridentifikationsinformationszertifikat, das für Überprüfung vierter Überprüfungsmittel verwendet wird, und des Überprüfungsergebnises, das die Korrektheit anzeigt, wenn alle Überprüfungsergebnisse durch sieben Überprüfungsmittel von den ersten Überprüfungsmitteln bis zu den siebten Überprüfungsmitteln korrekt sind.

2. Dienstbereitstellungssystem nach Anspruch 1,
wobei die Dienstbereitstellungsvorrichtung weiter Folgendes umfasst
neunte Speichermittel (23) zum Speichern, in Verbindung miteinander, von kooperativen Benutzeridentifikationsinformationen, die einen anderen Wert als den Wert der Benutzeridentifikationsinformationen aufweisen, und von Dienstbenutzeridentifikationsinformationen, die einen anderen Wert als den Wert der kooperativen Benutzeridentifikationsinformationen und der Benutzeridentifikationsinformationen aufweisen,
Mittel (23) zum Durchsuchen der neunten Speichermittel gemäß den kooperativen Benutzeridentifikationsinformationen und zum Lesen der Dienstbenutzeridentifikationsinformationen, die den kooperativen Benutzeridentifikationsinformationen zugeordnet sind, als Reaktion auf die kooperativen Benutzeridentifikationsinformationen und das Überprüfungsergebnis von der Überprüfungsvorrichtung, wenn das Überprüfungsergebnis korrekt ist, und
wobei die Überprüfungsvorrichtung Folgendes umfasst
zehnte Speichermittel (63) zum Speichern, in Verbindung miteinander, der Benutzeridentifikationsinformationen in dem Benutzeridentifikationsinformationszertifikat und der kooperativen Benutzeridentifikationsinformationen, die mit den früheren kooperativen Benutzeridentifikationsinformationen identisch sind, die einen anderen Wert als den Wert der Benutzeridentifikationsinformationen aufweisen, und
Mittel (61) zum Senden, an die Dienstbereitstellungsvorrichtung, der kooperativen Benutzeridentifikationsinformationen, die aus den zehnten Speichermitteln gelesen werden, und des Überprüfungsergebnises, das die Korrektheit gemäß den Benutzeridentifikationsinformationen in dem für die Überprüfung durch die vierten Überprüfungsmittel verwendeten Benutzeridentifikationsinformationszertifikat anzeigt, wenn alle Überprüfungsergebnisse durch sieben Überprüfungsmittel von den ersten Überprüfungsmitteln bis zu den siebten Überprüfungsmitteln korrekt sind.

3. Dienstbereitstellungssystem nach Anspruch 1 oder Anspruch 2, wobei
die zweiten Überprüfungsmittel (62) den von jeder der Einheitsvorrichtungen generierten Authentifikator gemäß den Informationen, die mit den geheimen Informationen in jeder der Einheitsvorrichtungen identisch sind oder diesen entsprechen, überprüfen.

4. Dienstbereitstellungssystem nach Anspruch 1 oder Anspruch 2, wobei
die geheimen Informationen ein geheimer Schlüssel in einem Verschlüsselungsverfahren mit öffentlichem Schlüssel sind, und
der Authentifikator eine digitale Signatur ist, die auf der Basis des geheimen Schlüssels generiert wird.

5. Mindestens eine aus einer Vielzahl von Einheitsvorrichtungen, die in einem Dienstbereitstellungssystem nach Anspruch 1 verwendet werden, umfassend:
dritte Speichermittel (44, 54) zum Speichern von geheimen Informationen, um den Authentifikator zu generieren;
Mittel (42, 52) zur Ausführung des Authentifizierungserzeugungsprozesses, wenn von der Einheitsintegrationsvorrichtung ein zufälliger Challenge-Wert, der von der Dienstbereitstellungsvorrichtung generiert wird, und eine Authentifizierungserzeugungsprozess-Ausführungsanforderung empfangen wird, um die Ausführung des Authentifizierungserzeugungsprozesses anzufordern; und
Mittel (42, 52) zum Generieren von Authentifizierungserzeugungsprozess-Ergebnisinformationen, in denen der Authentifizierungskontext und das Ausführungsergebnis des Authentifizierungserzeugungsprozesses in einem bestimmten Format beschrieben sind;
wobei der Authentifizierungskontext und das Ausführungsergebnis als die Authentifizierungserzeugungsprozess-Ergebnisinformationen durch die Einheitsintegrationsvorrichtung extrahiert werden,
der extrahierte Authentifizierungskontext und das Ausführungsergebnis in Authentifizierungsverarbeitungsergebnisinformationen in einem bestimmten Format durch die Einheitsintegrationsvorrichtung beschrieben werden, und
die Authentifizierungsverarbeitungsergebnisinformationen an die Dienstbereitstellungsvorrichtung von der Einheitsintegrationsvorrichtung über das Benutzerendgerät gesendet werden, der Authentifizierungskontext und
das Ausführungsergebnis von der Überprüfungsvorrichtung nach den Authentifizierungsverarbeitungsergebnisinformationen extrahiert werden, zu denen der Challenge-Wert und eine Richtlinie zur Bereitstellung von Diensten von der Dienstbereitstellungsvorrichtung hinzugefügt werden, und die Überprüfungsvorrichtung das Ausführungsergebnis, das Format der Authentifizierungsverarbeitungsergebnisinformationen, den Authentifikator im Authentifizierungskontext, das Gerätezertifikat, den Evaluierungsbericht, das Benutzeridentifikationsinformationszertifikat und den Challenge-Wert überprüft.

## Revendications

1. Système de fourniture de services comprenant : une pluralité de dispositifs unitaires (40, 50) qui exécutent indépendamment des procédés de constitution d'authentification constituant un traitement d'authentification qui utilise une authentification biométrique ; un dispositif d'intégration d'unités qui a chacun des dispositifs unitaires qui lui est incorporé ou qui lui est relié extérieurement pour communiquer avec chacun des dispositifs unitaires ; un terminal utilisateur qui a le dispositif d'intégration d'unités qui lui est incorporé ou qui lui est relié extérieurement afin de communiquer avec le dispositif d'intégration d'unités ; un dispositif de vérification qui vérifie le contenu d'exécution de chacun des procédés de constitution d'authentification conformément à un authentificateur ; et un dispositif de fourniture de services qui communique avec le terminal utilisateur et avec le dispositif de vérification,
chacun des dispositifs unitaires comprenant
des premiers moyens de stockage (44, 54) pour stocker un certificat d'équipement délivré à chacun des dispositifs unitaires par un éditeur de certificat d'équipement conformément à un procédé de chiffrement à clé publique, le certificat d'équipement incluant un corps de certificat d'équipement et une signature numérique générée pour le corps de certificat d'équipement par une clé secrète à l'éditeur de certificat d'équipement, le corps de certificat d'équipement incluant des informations d'identification pour une clé publique ou pour des informations secrètes afin de générer un code d'authentification de message du dispositif unitaire auquel le procédé de constitution d'authentification appartient, des informations de spécification de dispositif unitaire permettant de spécifier le dispositif unitaire auquel le procédé de constitution d'authentification appartient, et des informations de l'éditeur de certificats d'équipement pour spécifier l'éditeur de certificats d'équipement,
des deuxièmes moyens de stockage (44, 54) pour stocker un rapport d'évaluation, le rapport d'évaluation incluant les informations de spécification du dispositif unitaire utilisé pour l'exécution du procédé de constitution d'authentification, les informations du procédé de constitution d'authentification biométrique pour spécifier un procédé de constitution d'authentification biométrique incluant un algorithme d'authentification biométrique et une précision d'authentification biométrique par l'algorithme d'authentification biométrique,
des troisièmes moyens de stockage (45, 55) pour stocker des informations secrètes afin de générer l'authentificateur,
des moyens (42, 52) pour exécuter le procédé de constitution d'authentification lorsque chacun des dispositifs unitaires reçoit du dispositif d'intégration d'unités une valeur de défi aléatoire générée par le dispositif de fourniture de services et une demande d'exécution du procédé de constitution d'authentification,
des moyens générateurs d'authentificateur (46, 56) pour générer l'authentificateur par l'utilisation des informations secrètes conformément au certificat d'équipement, au rapport d'évaluation, à la valeur de défi et à une valeur de hachage du contenu d'exécution,
des moyens générateurs de contexte d'authentification (47, 57) pour générer un contexte d'authentification, le certificat d'équipement, le rapport d'évaluation, la valeur de défi, la valeur de hachage du contenu d'exécution et l'authentificateur décrit dans le contexte d'authentification dans un format spécifique, et
des moyens (46, 56) pour générer des informations de résultat du procédé de constitution d'authentification dans lesquelles le contexte d'authentification et le résultat d'exécution du procédé de constitution d'authentification sont décrits dans un format spécifique,
au moins l'un des dispositifs unitaires comprenant en outre
des quatrièmes moyens de stockage (55) pour stocker un certificat d'informations d'identification d'utilisateur délivré à un utilisateur du terminal utilisateur par une organisation tierce conformément à un procédé de chiffrement à clé publique, le certificat d'informations d'identification d'utilisateur incluant un corps de certificat et une signature numérique générée pour le corps de certificat par une clé secrète à l'organisation tierce, le corps de certificat incluant des informations d'identification d'utilisateur, une valeur de hachage d'informations de référence biométriques pour l'utilisateur et les informations de l'organisation tierce,
les moyens générateurs d'authentificateur (46, 56) d'au moins l'un des dispositifs unitaires générant l'authentificateur par l'utilisation des informations secrètes conformément au certificat d'équipement, au rapport d'évaluation, à la valeur de défi, au certificat d'informations d'identification d'utilisateur et à la valeur de hachage du contenu d'exécution, les moyens générateurs de contexte d'authentification d'au moins l'un des dispositifs unitaires générant un contexte d'authentification, le certificat d'équipement, le rapport d'évaluation, la valeur de défi, le certificat d'informations d'identification d'utilisateur, la valeur de hachage du contenu d'exécution et l'authentificateur décrit dans le contexte d'authentification sous un format spécifique,
le dispositif d'intégration d'unités comprenant
des cinquièmes moyens de stockage (33) pour stocker, en association l'une avec l'autre, des informations de spécification de dispositifs unitaires, un nom de fonction indiquant une fonction dans un procédé de constitution d'authentification et un ordre de traitement des fonctions,
des moyens (32) pour envoyer la valeur de défi et une demande d'exécution de procédé de constitution d'authentification au dispositif unitaire spécifié par les informations de spécification de dispositif unitaire conformément à l'ordre de traitement et aux informations de spécification de dispositif unitaire en réponse à la demande d'exécution de traitement d'authentification et à la valeur de défi du terminal utilisateur,
des moyens (32) pour envoyer la valeur de défi et la demande d'exécution de procédé de constitution d'authentification au dispositif unitaire ultérieur au dispositif unitaire de destination d'envoi dans l'ordre de traitement conformément à l'ordre de traitement et aux informations de spécification de dispositif unitaire dans les cinquièmes moyens de stockage en réponse aux informations de résultat du procédé de constitution d'authentification venant du dispositif unitaire qui est une destination d'envoi de la demande d'exécution de procédé de constitution d'authentification et
des moyens (32) pour générer des informations de résultat du traitement d'authentification conformément à l'ordre de traitement et aux informations de spécification de dispositif unitaire dans les cinquièmes moyens de stockage en réponse aux informations de résultat du procédé de constitution d'authentification venant du dispositif unitaire qui est une destination d'envoi de la demande d'exécution de procédé de constitution d'authentification lorsque le dispositif unitaire de destination d'envoi est le dernier dispositif unitaire dans l'ordre de traitement, le contexte d'authentification dans les informations de résultat de procédé de constitution d'authentification reçues de chacun des dispositifs unitaires et le résultat d'exécution dans les informations de résultat du procédé de constitution d'authentification reçues du dernier dispositif unitaire dans l'ordre de traitement décrit dans les informations de résultat du traitement d'authentification dans un format spécifique,
le terminal utilisateur comprenant
des moyens (11) pour envoyer au dispositif d'intégration d'unités la valeur de défi et la demande d'exécution de traitement d'authentification en réponse à une demande d'authentification qui demande à l'utilisateur d'effectuer l'authentification biométrique et la valeur de défi venant du dispositif de fourniture de services, et
des moyens (11) pour transférer au dispositif de fourniture de services des informations de résultat du procédé d'authentification reçues du dispositif d'intégration d'unités,
le dispositif de fourniture de services comprenant :
des sixièmes moyens de stockage (23) pour stocker en association l'une avec l'autre des informations d'identification d'utilisateur dans le certificat d'informations d'identification d'utilisateur et des informations d'identification d'utilisateur des services qui ont une valeur différente de celles des informations d'identification d'utilisateur pour identifier l'utilisateur,
des septièmes moyens de stockage (23) pour stocker une police de fourniture de services indiquant des conditions pour fournir des services à l'utilisateur, la police de fourniture de services incluant des informations d'identification de services, des informations de spécification des dispositifs unitaires utilisées pour l'exécution des procédés de constitution d'authentification, des informations de procédé de constitution d'authentification biométrique pour spécifier un procédé de constitution d'authentification biométrique incluant un algorithme d'authentification biométrique et une valeur de référence considérant la précision d'authentification biométrique comme étant appropriée,
des moyens (32) pour générer et maintenir la valeur de défi et l'envoi de la valeur de défi et de la demande d'authentification au terminal utilisateur en réponse à une demande de services du terminal utilisateur,
des moyens (32) pour envoyer la valeur de défi maintenue, les informations de résultat du traitement d'authentification et la police de fourniture de services au dispositif vérificateur en réponse aux informations de résultat du traitement d'authentification venant du terminal utilisateur,
des moyens (32) pour rechercher les sixièmes moyens de stockage conformément aux informations d'identification d'utilisateur et à la lecture d'informations d'identification d'utilisateur de services associées aux informations d'identification d'utilisateur en réponse à des informations d'identification d'utilisateur et un résultat de vérification venant du dispositif de vérification lorsque le résultat de vérification est approprié et
des moyens (32) pour envoyer les informations de services au terminal utilisateur conformément aux informations d'identification d'utilisateur de services lues,
le dispositif de vérification (60) comprenant
des huitièmes moyens de stockage (63) pour stocker une clé publique dans l'éditeur de certificat d'équipement de chacun des dispositifs unitaires et une clé publique auprès de l'organisation tierce,
des moyens (61) pour recevoir du dispositif de fourniture de services, la valeur de défi, les informations de résultat du traitement d'authentification et la police de fourniture de services,
des premiers moyens de vérification (62) pour vérifier que les informations reçues résultant du traitement d'authentification s'adaptent au format spécifique,
des deuxièmes moyens de vérification (62) pour vérifier un authentificateur dans le contexte d'authentification décrit dans les informations de résultat du traitement d'authentification reçues,
des troisièmes moyens de vérification (62) pour vérifier la signature numérique dans le certificat d'équipement inclus dans le contexte d'authentification décrit dans les informations de résultat du traitement d'authentification reçues conformément à la clé publique à l'éditeur de certificat d'équipement,
des quatrièmes moyens de vérification (62) pour vérifier la signature numérique dans le certificat d'information d'identification d'utilisateur inclus dans le contexte d'authentification décrit dans les informations reçues du résultat du traitement d'authentification conformément à la clé publique à l'organisation tierce,
des cinquièmes moyens de vérification (62) pour vérifier que le rapport d'évaluation inclus dans le contexte d'authentification décrit dans les informations reçues de résultat du traitement d'authentification conformément à la police de fourniture de services reçue,
des sixièmes moyens de vérification (62) pour vérifier la valeur de défi dans le contexte d'authentification décrit dans les informations de résultat du traitement d'authentification reçues conformément à la valeur de défi reçue,
des septièmes moyens de vérification (62) pour vérifier que le résultat d'exécution décrit dans les informations de résultat du traitement d'authentification reçues est approprié, et
des moyens pour envoyer (61) au dispositif de fourniture de services les informations d'identification d'utilisateur dans le certificat d'informations d'identification d'utilisateur utilisé pour les quatrièmes moyens de vérification et le résultat de la vérification qui indique le caractère adéquat lorsque tous les résultats de vérification par sept moyens de vérification allant des premiers moyens de vérification aux septièmes moyens de vérification sont appropriés.

2. Système de fourniture de services selon la revendication 1,
le dispositif de fourniture de services comprenant en outre
des neuvièmes moyens de stockage (23) pour stocker en association l'une avec l'autre des informations d'identification d'utilisateur associées qui ont une valeur différente de celle des informations d'identification d'utilisateur et des informations d'identification d'utilisateur de services qui ont une valeur différente de celle des informations d'identification d'utilisateur associées et des informations d'identification d'utilisateur,
des moyens (23) pour rechercher des neuvièmes moyens de stockage selon les informations d'identification d'utilisateur associées et lire des informations d'identification d'utilisateur de services associées aux informations d'identification d'utilisateur associées en réponse aux informations d'identification d'utilisateur associées et au résultat de vérification venant du dispositif de vérification lorsque le résultat de vérification est approprié, et
le dispositif de vérification comprenant en outre :
des dixièmes moyens de stockage (63) pour stocker en association l'un avec l'autre les informations d'identification d'utilisateur dans le certificat d'informations d'identification d'utilisateur et des informations d'identification d'utilisateur associées qui sont les mêmes que les premières informations d'identification d'utilisateur associées ayant une valeur différente de celle des informations d'identification d'utilisateur, et
des moyens (61) pour envoyer au dispositif de fourniture de services les informations d'identification d'utilisateur associées lues dans les dixièmes moyens de stockage et le résultat de vérification qui indique le caractère adéquat conformément aux informations d'identification d'utilisateur dans le certificat d'informations d'identification d'utilisateur utilisé pour la vérification par les quatrièmes moyens de vérification lorsque tous les résultats de vérification par sept moyens de vérification allant des premiers moyens de vérification aux septièmes moyens de vérification se révèlent appropriés.

3. Système de fourniture de services selon la revendication 1 ou la revendication 2, dans lequel :
les deuxièmes moyens de vérification (62) vérifient l'authentificateur généré par chacun des dispositifs unitaires conformément à des informations identiques ou correspondant aux informations secrètes dans chacun des dispositifs unitaires.

4. Système de fourniture de services selon la revendication 1 ou la revendication 2, dans lequel :
les informations secrètes sont une clé secrète dans un procédé de chiffrement à clé publique, et
l'authentificateur est une signature numérique générée sur la base de la clé secrète.

5. Au moins l'un d'une pluralité de dispositifs unitaires utilisés dans un système de fourniture de services selon la revendication 1, comprenant :
des troisièmes moyens de stockage (44, 54) pour stocker des informations secrètes afin de générer l'authentificateur ;
des moyens (42, 52) pour exécuter le procédé de constitution d'authentification lorsqu'il reçoit du dispositif d'intégration d'unités une valeur de défi aléatoire générée par le dispositif de fourniture de services et une demande d'exécution de procédé de constitution d'authentification pour demander l'exécution du procédé de constitution d'authentification ; et
des moyens (42, 52) pour générer des informations de résultat du procédé de constitution d'authentification dans lesquelles le contexte d'authentification et le résultat d'exécution du procédé de constitution d'authentification sont décrits dans un format spécifique ;
dans lequel le contexte d'authentification et le résultat d'exécution sont extraits en tant qu'informations de résultat de procédé de constitution d'authentification par le dispositif d'intégration d'unités,
le contexte d'authentification et le résultat d'exécution extraits sont décrits dans les informations de résultat du traitement d'authentification dans un format spécifique par le dispositif d'intégration d'unités et
les informations de résultat du traitement d'authentification sont envoyées au dispositif de fourniture de services du dispositif d'intégration d'unités via le terminal utilisateur, le contexte d'authentification, et
les résultats d'exécution sont extraits par le dispositif de vérification une fois que les informations de résultat du traitement d'authentification auxquelles la valeur de défi et une police de fourniture de services sont ajoutées par le dispositif de fourniture de services sont envoyées et le dispositif de vérification vérifie le résultat d'exécution, le format des informations de résultat de traitement d'authentification, l'authentificateur dans le contexte d'authentification, le certificat d'équipement, le rapport d'évaluation, le certificat d'informations d'identification d'utilisateur et la valeur de défi.
